(19) Europäisches Patentamt
European Patent Office
Office européen des brevets

(11) **EP 3 418 788 B1**

(12) **FASCICULE DE BREVET EUROPEEN**

(45) Date de publication et mention de la délivrance du brevet:
**13.04.2022 Bulletin 2022/15**

(21) Numéro de dépôt: **18000486.3**

(22) Date de dépôt: **14.10.2011**

(51) Classification Internationale des Brevets (IPC):
***G02B 21/00*** *(2006.01)*

(52) Classification Coopérative des Brevets (CPC):
**G02B 21/0056; G02B 21/0072; G02B 21/0076**

(54) **PROCÉDÉ ET DISPOSITIF DE MESURE OPTIQUE**

VERFAHREN UND VORRICHTUNG ZUR OPTISCHEN MESSUNG

METHOD AND DEVICE FOR OPTICAL MEASUREMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2010 FR 1004067**

(43) Date de publication de la demande:
**26.12.2018 Bulletin 2018/52**

(62) Numéro(s) de document de la (des) demande(s) initiale(s) en application de l'article 76 CBE:
**11782178.5 / 2 628 041**

(73) Titulaire: **Bioaxial SAS**
**75010 Paris (FR)**

(72) Inventeur: **SIRAT, Gabriel Y.**
**75014 Paris (FR)**

(56) Documents cités:
**US-A1- 2002 141 052    US-A1- 2003 210 405**
**US-A1- 2007 070 496**

• **BERRY M V ET AL: "Conical diffraction: observations and theory", PROCEEDINGS OF THE ROYAL SOCIETY OF LONDON. SERIES A,CONTAINING PAPERS OF A MATHEMATICAL AND PHYSICAL CHARACTER, ROYAL SOCIETY OF LONDON, LONDON, GB, vol. 462, 8 février 2006 (2006-02-08), pages 1629-1642, XP007918531, ISSN: 0950-1207, DOI: DOI:10.1098/RSPA.2006.1680**

**Description**

Domaine Technique de l'Invention

La présente invention concerne un procédé et un dispositif optique de mesure. Elle trouve des applications en particulier dans la Microscopie, par exemple, dans le domaine de la Biologie et l'acquisition de l'information biologique à partir d'observations optiques.

L'Etat de l'Art

Dans ce chapitre, nous présentons l'état de l'art dans le domaine de la microscopie de fluorescence et des méthodes de superrésolution, ainsi que des problèmes que les méthodes existantes ne savent pas résoudre. Ce chapitre ne concerne pas les modes de réalisation de l'invention revendiquée.

Un Microscope est un instrument optique utilisé en général pour voir, analyser ou mesurer les objets trop petits pour l'œil nu.

Nous utiliserons le terme biologique pour décrire toute entité de la Science du vivant, quel que soit sa provenance, humaine, animale ou végétale et la finalité de son observation, recherche, diagnostique ou thérapeutique. Ce terme inclut les utilisations médicales de la technique décrite. La Microscopie est utilisée dans le domaine de la Biologie, par exemple, pour observer, étudier et mesurer des entités (objets) biologiques et leur dynamique.

Les définitions usuelles sont utilisées pour : limite de diffraction optique critère de Rayleigh, disque d'Airy et ses rayon et diamètre. Nous utilisons dans le contexte de l'invention les termes de superrésolution, superrésolu, d'imagerie de superrésolution et de microscopie de superrésolution pour décrire l'acquisition de données optiques, en imagerie ou en microscopie, à une résolution supérieure à la limite de diffraction optique. Les définitions usuelles sont utilisées pour la fluorescence et pour les fluorophores.

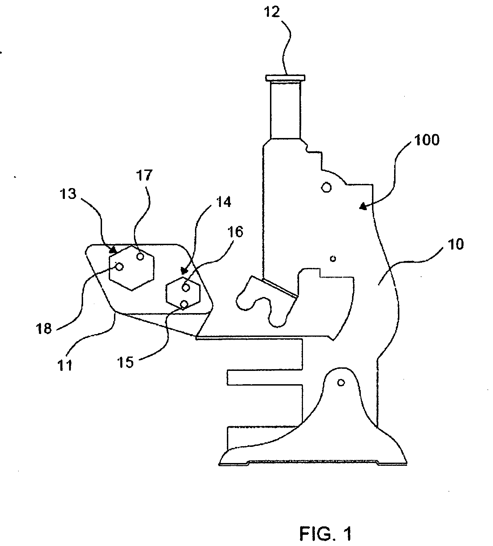

On se réfère maintenant à la Figure. 1, qui représente une illustration du paradigme de la Microscopie, 100, dans le domaine de la Biologie.

La Microscopie consiste en l'illumination, par une source lumineuse, non représentée, à l'aide d'un Microscope, 10, d'un échantillon biologique, 11, et la mesure en fonction du temps, à l'aide d'une observation visuelle ou d'un module de détection, 12, de la lumière émise par l'échantillon, L'échantillon en Biologie consiste en une - ou une pluralité - d'entités objets biologiques différentes, 13 et 14, positionnées à différentes positions. Des exemples de tels objets, sont, entre autres, une cellule, un virus, une protéine et un fragment d'ADN.

La microscopie de fluorescence est une des variantes de la microscopie ; elle a remplacé, dans de nombreuses applications biologiques, les autres techniques de microscopie. Un microscope à fluorescence est un microscope optique utilisé pour étudier les propriétés des substances organiques ou inorganiques utilisant les phénomènes de fluorescence au lieu de, ou en plus d'autres modalités telle que la réflexion et l'absorption.

On se réfère de nouveau à la Figure. 1, décrivant un microscope de fluorescence ; en microscopie de fluorescence on fixe des fluorophores, de minuscules sources ponctuelles, 15 à 18, basées sur le phénomène physique de la fluorescence à un photon, à des positions spécifiques et prédéterminées des objets biologiques, 13 et 14 ; on observe la lumière émise par les fluorophores en lieu et place d'observer la lumière émise par les objets biologiques, 13 et 14, eux-mêmes.

L'échantillon est éclairé par une lumière de longueur d'onde, ou de longueurs d'onde spécifiques, qui est absorbée par les fluorophores, induisant ainsi l'émission de lumière à des longueurs d'onde différentes et plus élevées. La lumière d'illumination est séparée de la fluorescence émise, qui est plus faible, par l'utilisation d'un filtre spectral d'émission.

Les fluorophores sont devenus un outil important de la visualisation d'objets biologiques. L'activité et l'information biologique comprenant des détails au-dessus de la limite de résolution de 200 nm sont systématiquement visualisés et mesurées en utilisant la microscopie de fluorescence. Cette limite de résolution est dérivée du critère de Rayleigh, qui, dans le meilleur des cas, atteint 200nm dans des cystéines conçus spécialement. Pendant longtemps, jusqu'à l'émergence des techniques de superrésolution décrites ci-dessous, il était assumé que les techniques optiques, y compris la microscopie de fluorescence, sont incapables de visualiser des détails plus petits que le critère de Rayleigh, de l'ordre de 200 nm.

Cependant, d'autres activités biologiques fondamentales se produisent également à des échelles de taille inférieure à 200 nm dans des échantillons biologiques. A ce niveau de résolution spatiale, des phénomènes importants peuvent être observés : les processus biologiques à l'échelle intracellulaire, le transfert d'information cellulaire, le repliement et le dépliement des protéines et les modifications de l'ADN et l'ARN. Ainsi, par exemple, la mesure de ces informations intracellulaires ouvrira de nouvelles voies à la compréhension de l'activité biologique, et conduira à des progrès dans la connaissance et le suivi de la recherche et du diagnostic médical.

Les principales implémentations de la microscopie de fluorescence, décrites en détails dans la littérature, sont le microscope confocal souvent utilisé dans une configuration à balayage ou à disque rotatif et le microscope d'imagerie à grand champ.

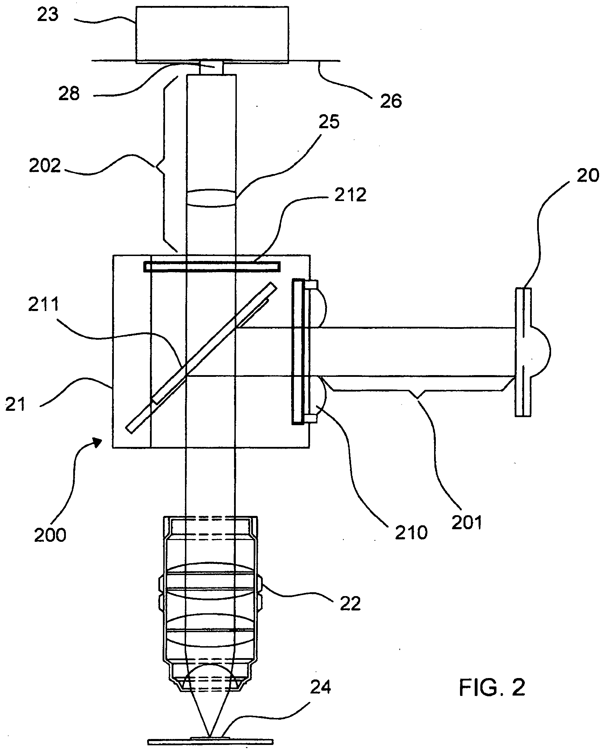

On se réfère maintenant à la figure. 2, qui est une représentation simplifiée d'un microscope confocal à fluorescence 200.

Un microscope confocal de fluorescence, Fig. 2, est un instrument optique. Ses principaux composants matériels sont représentés dans la figure. 2. Ils comprennent

Une source de lumière, 20,

Un cadre optomécanique non représenté,

un cube de filtres, 21,

Un objectif de microscope 22, et,

Un ensemble détecteur, 23,

Une unité de traitement, non représentée.

La source de lumière, 20, qui peut être une lampe à arc ou un laser, crée de l'énergie lumineuse nécessaire pour la fluorescence.

Le cadre optomécanique, non représenté, est le support de tous les éléments optiques et comprend des optiques auxiliaires et les capacités d'alignement. Il comprend également, des éléments optiques, non représentés, capables de façonner le faisceau, pour permettre sa focalisation d'un point de taille minimale, au moyen de l'objectif du microscope.

Il peut comprendre également, dans un microscope confocal de fluorescence à balayage, un mécanisme de balayage, spatial ou angulaire, non représenté pour modifier la position de la source ponctuelle par rapport à l'objet à mesurer.

Le mécanisme de balayage peut alternativement :

- Translater mécaniquement l'objet, en utilisant par exemple une platine de translation,
- Scanner optiquement le faisceau sur l'objet, en utilisant par exemple un ensemble de miroirs galvanométriques ou translateurs acousto-optiques, où
- Utiliser une combinaison quelconque de ces moyens de translation, mécaniques ou Optiques.

Dans un microscope confocal de fluorescence à balayage, l'information est recueillie point à point, en utilisant le mécanisme de balayage.

Il peut comprendre également, dans un microscope confocal de fluorescence à disque rotatif, un disque rotatif, comportant une pluralité de trous microscopiques, permettant la projection simultanée d'une pluralité de points. Dans un microscope confocal de fluorescence à disque rotatif, un ensemble de points, correspondant aux trous microscopiques est acquis à chaque instant et la rotation du disque permet de balayer l'ensemble de la surface de l'échantillon pour une position longitudinale donnée.

Le cube de filtres, 21, canalise les différents signaux optiques et évite la contamination du signal de fluorescence par l'émission. Le cube de filtres se décompose en: filtre d'excitation, 210, miroir dichroïque, 211, et filtre d'émission, 212. Les filtres et le miroir dichroïque sont choisis en fonction de la longueur d'onde d'excitation et des caractéristiques spectrales d'émission du fluorophore.

L'objectif de microscope, 22, focalise la lumière créée par la source dans le plan focal de l'objectif, 24, en une distribution lumineuse de taille réduite, la distribution lumineuse optimale consistant en un disque d'Airy. L'objectif de microscope, 22, permet également de recueillir en retour la lumière fluorescente émise par les fluorophores. 30

Pour un microscope confocal de fluorescence à balayage le système peut être déscanné, c'est-à dire que la lumière en retour peut passer par le mécanisme de balayage pour compenser la translation due au balayage.

Une lentille de détecteur, 25, crée, au plan image du détecteur 26, une image magnifiée du plan focal de l'objectif, 24.

Un trou confocal, 27, est théoriquement placé dans le plan image du détecteur, 26. Dans la plupart des systèmes pratiques, le trou confocal, 27, est placé dans un plan d'imagerie intermédiaire non représenté et réimagé sur le plan image du détecteur, 26.

L'assemblage du détecteur, 23, détecte l'intensité fluorescente globale dans le volume éclairé, et la transforme en signal numérique. Pour un microscope confocal à balayage, l'assemblage du détecteur est constitué d'un détecteur d'un seul élément, comme un PMT ou SPAD. Pour un microscope confocal à disque rotatif, l'assemblage du détecteur est constitué d'une matrice d'éléments de détection, telle qu'un CCD, un EMCCD, un CMOS ou une matrice de SPAD.

L'ensemble des composants montés à partir de la source lumineuse jusqu'au filtre dichroïque est la voie d'éclairage, 201. L'ensemble des composants montés à partir du filtre dichroïque jusqu'à l'assemblage du détecteur est la voie de détection, 202.

Le processus optique élémentaire d'un microscope confocal peut être segmenté en six étapes :

- Projection de la lumière sur le volume d'analyse
- Émission de lumière fluorescente par les fluorophores
- Imagerie des fluorophores sur le plan focal
- Limitation dans le plan focal de la lumière analysée par le trou confocal
- Intégration de la lumière analysée par un détecteur photoélectrique
- Visualisation de l'intensité mesurée sous forme d'une valeur de pixel dans une image

Des microscopes à fluorescence sont disponibles auprès de plusieurs fabricants, comme par exemple, Nikon, Zeiss, Leica ou Olympus. Les microscopes à fluorescence peuvent être soit des microscopes standards adaptés à la fluorescence soit des microscopes spécifiques optimisés pour la fluorescence. Les microscopes modernes sont des instruments polyvalents capables de fonctionner dans de nombreuses modalités différentes, y compris, mais sans s'y limiter, les modalités de fluorescence, en utilisant la même plate-forme optomécanique et la plupart des composants. La plupart des microscopes à fluorescence sont développés en tant que plate-forme ouverte, capable d'effectuer plusieurs fonctionnalités additionnelles avec des modifications minimes. D'autres microscopes à fluorescence sont des instruments dédiés, personnalisés à une tâche spécifique, comme le diagnostic médical ou pharmaceutiques.

De nouvelles méthodes optiques, les méthodes de superrésolution, sont capables de discriminer des fluorophores, en dessous du critère de Rayleigh. Ces méthodes, sont développés par plusieurs entreprises, laboratoires et chercheurs et certains des instruments utilisant ces méthodes, les microscopes de superrésolution, sont disponibles commercialement. Plusieurs analyses comparatives des méthodes de superrésolution ont été publiées récemment dans la littérature, comme l'article écrit par Ricardo Henriques et M. Musa Mhlanga, intitulé « PALM and STORM : What hides beyond the Rayleigh limit?", [1], ou l'article écrit par Kelly Rae Chi intitulé "Super resolution microscopy: breaking the limits", [2].

Une bibliographie mise à jour sur la superrésolution se trouve sur le site web de la société Zeiss, [3], et sur le site web de la société Nikon, [4].

Un microscope de ce type est connu du document US2002141052 A1.

Les différentes méthodes de microscopie existantes et les microscopes existants, n'incorporant pas la superrésolution, permettent l'observation microscopique dans la limite de la diffraction optique. Ceci réduit leur champ d'utilisation à un ensemble d'applications limité.

Les nouvelles techniques de superrésolution permettent elles d'obtenir des informations au-delà de la limite de résolution. Le principal problème de l'ensemble des techniques existantes de superrésolution est que l'enveloppe des performances, exprimée en termes de résolution latérale, de résolution longitudinale, de vitesse, d'intensité lumineuse nécessaire, de photo-toxicité dans l'objet biologique, d'aptitude à mesurer des objets différents, est très limitée.

De plus, la plupart des méthodes et instruments existants de superrésolution peuvent fournir soit une bonne résolution latérale, soit une bonne résolution longitudinale, mais rarement les deux.

De plus, tous ces instruments sont complexes et nécessitent une haute technicité de l'opérateur.

De plus, ces instruments ne peuvent observer généralement qu'une faible partie des spécimens biologiques, du a de fortes limitations opérationnelles, telles que pour certains d'entre eux une faible profondeur de champ ou de très fortes intensités nocives pour les cellules.

Un autre problème avec les méthodes et instruments existants de super résolution, est que la plupart d'entre eux sont en mesure de récupérer, dans le volume illuminé, les attributs d'un fluorophore unique, mais ne parviennent pas à reconnaître simultanément la présence de plusieurs fluorophores et de mesurer leurs attributs.

Un problème supplémentaire avec les méthodes et instruments existants de superrésolution est que ces méthodes et instruments existants sont présentés aux utilisateurs et perçus par eux comme un outil général, apte à remplacer les microscopes standard ou confocal. Cependant, les méthodes et instruments existants de superrésolution manquent de la simplicité, de la robustesse, de la facilité d'utilisation et des prix compétitifs des microscopes standard ce qui freine leur utilisation comme outils de recherche générale ou comme outils de diagnostic.

Un autre problème avec les méthodes et instruments existants de superrésolution est que la plupart de ces méthodes et instruments sont construits comme des instruments autonomes conçus pour remplacer les microscopes standards. Une telle approche, nécessite le remplacement des instruments existants ainsi que le renouvellement de tous les systèmes périphériques et toutes les connaissances et savoir-faire, liés aux plateformes de microscopie et développés depuis de nombreuses années.

Un autre problème avec la plupart des méthodes et instruments existants de microscopie de fluorescence et de superrésolution est que ces méthodes et instruments sont conçus sur un paradigme d'acquisition d'image, pour lequel l'entité de base de l'information est une - ou plusieurs images, ou une - ou plusieurs - régions ROI - Region Of Interest bi ou tridimensionnelles. Les méthodes algorithmiques, systémiques et de superrésolution décrites ultérieurement dans le contexte de l'invention permettront, par leur inhérente flexibilité, le développement de stratégies nouvelles d'acquisition. Ces procédures d'acquisition, dynamiques et sélectives, seront définies par une gestion optimisée de la séquence d'acquisition et de traitement interactif et différé. Elles permettront une optimisation plus évoluée de l'information utile, définie par des critères basés sur la forme, la géométrie et la dynamique d'un ou plusieurs objets fluorescents, séparément ou l'un par rapport à l'autre.

Il y a donc toujours un besoin urgent de fournir des méthodes et instruments de superrésolution et des méthodes algorithmiques capable de mesurer avec une grande précision les attributs d'un fluorophore. Il est en outre nécessaire de fournir des méthodes et des instruments pour détecter et quantifier la présence de plusieurs fluorophores placés dans le même volume illuminé.

## RESUME DE L'INVENTION

Un but d'au moins un mode de réalisation de la présente invention est de fournir une technique de superrésolution en microscopie de fluorescence pour la biologie, plus généralement aux sciences de la vie et, finalement, à la pharmacologie, la médecine et au diagnostic, qui permettra de surmonter les lacunes des dispositifs de l'art antérieur.

Un des buts d'au moins un mode de réalisation de la présente invention est de fournir une technique de superrésolution en microscopie de fluorescence pour la biologie afin de réaliser un système optique qui est capable de mesurer avec une grande précision les attributs d'un fluorophore, ainsi que de reconnaître et de mesurer les attributs de plusieurs fluorophores placés dans le même volume illuminé.

Un autre but d'au moins un mode de réalisation de l'invention est de fournir une technique de superrésolution en microscopie de fluorescence pour la biologie qui mesure avec une grande précision les attributs d'un fluorophore.

Un autre but d'au moins un mode de réalisation de l'invention est de fournir une technique de superrésolution en microscopie de fluorescence pour la biologie qui acquiert et mesure, avec une grande précision, les attributs de plusieurs fluorophores présents dans le même volume illuminé

A cet effet, un premier aspect de l'invention propose un procédé optique de mesure pour déterminer la position spatiale d'au moins un nanoémetteur lumineux d'un échantillon, le procédé comportant :

- la projection d'une distribution lumineuse compacte ou d'une combinaison de distributions lumineuses compactes telles qu'un zéro d'intensité existe au centre de la distribution lumineuse compacte ou au centre de la combinaison de distributions compactes ;
- le déplacement d'une distribution lumineuse compacte ou d'une combinaison de distributions lumineuses compactes, pour suivre le nanoémetteur lumineux et pour positionner le nanoémetteur au centre de la distribution lumineuse compacte ou au centre de la combinaison de distributions compactes en fonction du temps ;
- l'évaluation de la position du nanoémetteur lumineux, lorsqu'il est au centre de la distribution compacte ou au centre de la combinaison de distributions lumineuses compactes, sans lumière fluorescente.

Selon un mode de réalisation, un mouvement du nanoémetteur lumineux est compensé par un mouvement adéquat de la position de la distribution lumineuse, pour suivre le nanoémetteur lumineux en utilisant une partie de la lumière fluorescente émise.

Selon un mode de réalisation, le procédé peut comporter en outre la détermination de façon dynamique, sur la base d'une hypothèse de positionnement dudit au moins un nanoémetteur, ou sur la base d'un premier ensemble de mesures, de la séquence optimale des distributions compactes.

Selon un mode de réalisation, la combinaison de distributions compactes inclut un vortex.

Le vortex peut être généré par une diffraction conique.

Selon un mode de réalisation, le procédé comporte l'analyse de la lumière détectée pour obtenir une information de la position longitudinale dudit au moins un nano émetteur.

Un deuxième aspect de l'invention propose un dispositif optique de mesure pour déterminer la position spatiale d'au moins un nanoémetteur lumineux positionné d'un échantillon, le dispositif comportant :

- des moyens de projection aptes à projeter une distribution lumineuse compacte ou une combinaison de distributions lumineuses compactes telles qu'un zéro d'intensité existe au centre de la distribution lumineuse compacte ou au centre de la combinaison de distributions compactes;
- des moyens de déplacement aptes à déplacer dans de l'espace la distribution lumineuse compacte, pour suivre le nanoémetteur lumineux et pour positionner le nanoémetteur au centre de la distribution lumineuse compacte ou au centre de la combinaison de distributions compactes en fonction du temps,

- des moyens d'analyse aptes à évaluer de la position du nanoémetteur lumineux, lorsqu'il est au centre de la distribution compacte ou au centre de la combinaison de distributions compactes, sans lumière fluorescente.

Selon un mode de réalisation, les moyens de déplacement sont aptes à compenser un mouvement du nanoémetteur lumineux par un mouvement adéquat de la position de la distribution lumineuse, pour suivre le nanoémetteur lumineux, en utilisant une partie de la lumière fluorescente émise.

Selon un mode de réalisation, le dispositif optique de mesure comporte des moyens pour déterminer de façon dynamique, sur la base d'une hypothèse de positionnement dudit au moins un nanoémetteur, ou sur la base d'un premier ensemble de mesures la séquence optimale des distributions compactes.

Selon un mode de réalisation, les moyens de déplacement comprennent des miroirs contrôlables, dispositifs électro-optiques ou acousto-optiques, ou des actionneurs piézo-électriques capables de déplacer la position de la distribution compacte ou de la combinaison de distributions compactes.

Selon un mode de réalisation la combinaison de distributions compactes de lumière inclut un vortex.

Le vortex peut être généré par une diffraction conique.

Selon un mode de réalisation, le dispositif comporte des moyens d'analyse de la lumière détectée pour obtenir une information de la position longitudinale dudit au moins un nano émetteur.

Un but d'au moins un mode de réalisation est de fournir un système de superrésolution en microscopie de fluorescence comprenant le module de superrésolution latérale incorporé dans la voie d'éclairage du microscope, projetant sur un échantillon constitué d'une pluralité de fluorophores, placés à différentes positions latérales dans la distribution lumineuse compacte, une séquence de spots lumineux spatialement différenciés de taille de l'ordre de la demi longueur d'onde, chacun des fluorophores fluoresçant avec une séquence d'intensités lumineuses fluorescentes dépendant de façon linéaire ou non linéaire de la lumière incidente sur le fluorophore et caractérisant une position latérale du fluorophore.

Certains modes de réalisation, décrits dans des inventions précédentes, de la même famille, concernent une technique nouvelle de superrésolution basée sur deux modules optiques nouveaux et complémentaires, référencés ici module latéral de superrésolution et module longitudinal de superrésolution Le module latéral de superrésolution fournit principalement une résolution latérale additionnelle et le module de superrésolution longitudinale fournit principalement une résolution longitudinale. Des modes de réalisation utilisant un des modules, comme décrit dans cette invention, peuvent également être mises en œuvre. Les deux modules optiques sont complétés par l'algorithmique adéquat et d'un module de détection amélioré. Les modules peuvent être intégrés sur des microscopes à fluorescence existants. Alternativement, des microscopes à fluorescence dédiés et optimisés, peuvent être développés autour du système de superrésolution en trois dimensions.

Les procédés et dispositifs pour la superrésolution, selon des modes de réalisation de la présente invention, s'écarte sensiblement des techniques classiques et des conceptions de l'art antérieur, et, ce faisant, fournissent un appareil développé dans le but de réaliser les techniques et les dispositifs de système de superrésolution capable de mesurer avec une grande précision les descripteurs d'un fluorophore et de reconnaître et de mesurer les descripteurs de plusieurs fluorophores placé dans le même volume illuminé.

La présente invention sera mieux comprise par la description détaillée qui suit de modes de réalisation préférés de celle-ci, pris conjointement avec les dessins.

D'autres objets et avantages de l'invention présente deviendront évidents pour le lecteur, et il est considéré que ces objets et ces avantages fassent partie de la présente invention.

## BREVE DESCRIPTION DES DESSINS

L'invention va maintenant être décrite en relation avec certains modes de réalisation préférés en référence aux figures illustratives suivantes de sorte qu'elle puisse être mieux comprise.

Avec une référence spécifique à présent aux figures en détail, il est souligné que les indications figurantes sont présentées à titre d'exemple, et à des fins d'illustration de la discussion des modes de réalisation préférés de l'invention et ne sont présentés que dans le but de fournir ce qui est puisse être considéré la description la plus utile et facile à comprendre des principes et des aspects conceptuels de l'invention. À cet égard, aucune tentative n'est faite pour montrer des détails de structure de l'invention plus en détail que ce qui est nécessaire pour une compréhension fondamentale de l'invention, la description prise avec les dessins faisant apparaître à l'homme de l'art comment les différentes formes de l'invention peut être réalisée dans la pratique.

Dans les dessins :

Fig. 1 est une représentation simplifiée en perspective d'un microscope à fluorescence confocal de l'art antérieur ;

Fig. 2 est une représentation picturale simplifiée d'un système de superrésolution en microscopie de fluorescence, conformément à un mode de réalisation de la présente invention ;

Fig. 3 est une illustration schématique simplifiée d'un setup d'un module de diffraction conique, conformément à un mode de réalisation de la présente invention ; 30

Fig. 4 est une représentation picturale simplifiée des deux paradigmes de mesure, utilisant la microscopie confocale et la méthodologie ;

Fig. 5 est une représentation picturale simplifiée de l'implémentation préférée de la méthodologie de mesure, à plateforme de microscopie SRCDP

Fig. 6 est une illustration schématique simplifiée d'un module latéral de superrésolution, conformément à un mode de réalisation de la présente invention ;

Fig. 7 présente des tables de distributions lumineuses d'un module de diffraction conique en fonction de la polarisation des polariseurs d'entrée et de sortie pour plusieurs valeurs du paramètre de diffraction conique, po. Ces distributions lumineuses ont été calculées en utilisant le logiciel DIFFRACT de MMresearch Corp.

Fig. 8 est une illustration schématique simplifiée d'une méthode d'algorithme de superrésolution de données de fluorophores, conformément à un mode de réalisation de la présente invention.

Fig. 9 est une illustration schématique simplifiée du calcul du descripteurs $\rho$

Fig. 10 est une illustration schématique simplifiée du module de contrôle de la plateforme SRCDP.

Dans toutes les figures, des chiffres de référence similaires identifient des pièces similaires.

## DEFINITIONS ET COMPLEMENTS TECHNIQUES

Certains des compléments techniques détaillés ci-dessous ne sont pas forcément nécessaires pour réaliser l'invention revendiquée, mais rentrent dans le contexte général dans lequel l'invention peut être réalisée.
Les définitions usuelles sont utilisées dans la description pour : phase et polarisation, polarimétrie, paramètres de Stokes et techniques de mesure des paramètres de Stokes.
Le centre ou centroïde d'une distribution de lumière est le centre de gravité de l'intensité. Le diamètre d'une distribution de lumière est le diamètre du premier zéro d'intensité, pour des ondes régulières et singulières, sans prendre en compte le zéro central de l'onde singulière. Deux distributions de lumière sont colocalisées si leurs centres coïncident ou sont séparés par une valeur spatiale fixe, prédéterminée.
Dans ce document, nous utiliserons la longueur d'onde d'émission, comme métrique de base du système.
Dans ce document, les définitions usuelles sont utilisées pour les composants optiques suivants : lentille dont la définition est élargie, pour inclure l'ensemble des moyens optiques qui transmettent, réfractent ou réfléchissent la lumière, optique auxiliaire - sous-module optique visant à interfacer et à ajuster soit les paramètres géométriques soit les paramètres de phase et/ou de polarisation entre deux autres sous-modules ou modules optiques -, polariseur, analyseur, lame de retard, séparateur de faisceau beamsplitter en anglais, polarisant et non-polarisant, combineur de faisceau beam combiner en anglais, polarisant et non-polarisant.
Nous nous référons à un polariseur partiel pour décrire un élément ou un module dont l'absorption est différente pour les deux polarisations linéaires dichroïsme linéaire ou pour les deux polarisations circulaires dichroïsme circulaire.
Nous nous référons à des sous-modules dynamiques de polarisation ou de phase, pour décrire les moyens optiques dont les propriétés de polarisation ou de phase varient en fonction du temps de façon contrôlée, de façon discrète ou continue.
Ces sous-modules dynamiques de polarisation ou de phase comprennent, mais ne sont pas limités à : lames d'onde tournante sur leur axe, valves de lumière basées sur des technologies à cristaux liquides, dispositifs électro-optiques, connus aussi comme cellules de Pockels, cellules de Kerr, dispositifs électro-optiques résonnants, dispositifs magnéto-optiques, connus également en tant que cellules de Faraday, dispositifs acousto- ou élasto-optiques ou toute combinaison de ces moyens.
Nous nous referons a l'« algorithme du centroïde » pour décrire la procédure usuelle de mesure du centroïde et éventuellement de la largeur (FWHM - acronyme en anglais pour « Full width Half Maximum ») d'une distribution lumineuse. De nombreux articles ont été publiés sur cet algorithme comme par exemple l'article de Lindegren en 1978, (5).

Cet algorithme, a sa source dans l'Astronomie et l'Astrométrie, et a permis la mesure de la position des étoiles avec une très grande précision. Cette algorithme est utilisé aujourd hui dans l'ensemble de l'instrumentation optique, y compris en Biologie de superresolution.

Dans ce document les définitions usuelles sont utilisées pour les composants optoélectroniques suivantes : détecteur photoélectrique, CCD, EMCCD, CMOS, SPAD Single Photon Avalanche Diode et matrice de SPAD.

Nous utiliserons les termes :

- Image optique, pour la distribution spatiale d'intensité lumineuse,
- Image électronique, pour décrire la distribution spatiale de charges pour un CCD, de courant pour un CMOS ou d'événements pour un SPAD, créées par l'image optique, à un instant donné, dans un plan de détection,
- Image numérique, pour décrire une matrice de nombres créée par la numérisation de l'image électronique.

Pour simplifier la lecture et la compréhension du texte nous utiliserons aussi le terme d'image pour la sortie d'un détecteur à pixel unique tel qu'un PMT ou SPAD, en la considérant comme une image consistant en un unique pixel.

Lorsqu'aucune ambiguïté n'existe, ou que la distinction entre les trois types d'images n'est pas nécessaire, nous utiliserons le terme simplifié générique d'image.

Les images détaillées dans ce document peuvent être qualifiées des micro images, des images de taille sensiblement égale à un petit nombre de diamètres du disque d'Airy, typiquement inférieur à 5 diamètres, et/ou à faible nombre de pixels, typiquement 4*4 à 32*32.

Dans une image numérique Aj, les indices m et n représentent les indices des pixels ; l'origine des pixels sera choisie comme la projection du centre du volume d'analyse défini dans un paragraphe ultérieur.

Nous avons présenté les images en utilisant la terminologie utilisée pour les détecteurs matriciels, tels que les CCD, les EMCCD et les CMOS. Pour les SPAD et les matrices de SPAD, le résultat d'une mesure est une liste ordonnée dans le temps, d'impacts de photons détaillant, pour chaque photon, le temps d'impact et la position de l'impact. Pour simplifier la présentation de ce document, nous inclurons ce cas dans notre définition des images.

*Polarimétrie et vecteur de Stokes*

La polarimétrie se réfère à la mesure de l'état de polarisation de la lumière incidente. L'état de polarisation de la lumière incidente peut être décrit par les paramètres de Stokes, un ensemble de valeurs, introduit par George Gabriel Stokes en 1852, et utilisé en Optique.

**Compléments techniques connus de l'Homme de l'Art**

Dans ce chapitre nous reprenons un ensemble d'éléments techniques nécessaires à la description de l'invention et connus de l'Homme de l'Art.

*Coordonnés cartésiennes et polaires*

Les coordonnées polaires d'un point, $\rho$, $\theta$, se déduisent des coordonnées cartésiennes x, y à l'aide de l'équation :

$$\rho^2 = x^2 + y^2 ; \quad \theta = \tan^{-1}\left(\frac{y}{x}\right) \qquad \text{(EQ. 1)}$$

*Champ électrique en coordonnées polaires et modes angulaires*

Soit un champ électrique complexe vectoriel, E($\rho$,$\theta$), décrit en coordonnées polaires ($\rho$,$\theta$) ; le champ électrique peut être représenté par une amplitude réelle, A($\rho$,$\theta$). une phase réelle $\varphi$($\rho$,$\theta$) et un vecteur unité de polarisation, u(r,$\theta$):

$$\mathbf{E}(\rho,\theta) = A(\rho,\theta)\,\exp\left[i\,\varphi(\rho,\theta)\right]\mathbf{u}(\rho,\theta) \qquad \text{(EQ. 2)}$$

Il est usuel en Optique de décomposer les composantes du Champ, soit son amplitude, sa phase et sa polarisation. en modes orthogonaux, cartésiens ou polaires.

De nombreuses décompositions en modes orthogonaux polaires, tels que les modes Gaussiens, Hermite Gaussiens, et Laguerre-Gaussiens sont connus de l'Homme de l'Art.

Nous utiliserons principalement dans ce document, la décomposition de l'amplitude du champ électrique en modes Hypergéométriques-Gaussiens HyGG de forme :

$$A(\rho, \theta) \propto \rho^{p+|m|} \exp\left(-\rho^2 + i\ell\theta\right) \qquad \text{(EQ. 3)}$$

Dans cette décomposition, p est le mode radial et $\ell$ l'ordre azimutal.

*Ondes singulières*

Une onde singulière comprend une intensité nulle en son centre et une variation de phase azimutale d'un multiple de $2\pi$. Ce thème de recherche en Optique, initié par l'article majeur de J.F Nye et M. Berry, en 1974, [6], est maintenant connu comme l'"optique singulière". Des exemples d'ondes régulières et singulières sont présentés dans la suite.

*Topologie et distributions lumineuses compactes*

Une distribution lumineuse, ponctuelle, sera réputée compacte si elle remplit une des conditions de compacité définies ci-dessous, par deux conditions alternatives et non exclusives :
Soit, plus de 75% de l'énergie est contenue dans un cercle de rayon inférieur à 1.75 fois le rayon d'Airy,
**[0095]** Soit un domaine lumineux, contenant plus de 65% de l'énergie est délimité par une ligne d'intensité nulle comprise dans un cercle de rayon inférieur à deux fois le rayon d'Airy,
**[0096]** Nous distinguons différentes familles de distributions lumineuses ponctuelles, de topologies différentes :

Les distributions régulières, dans leur définition usuelle en Optique,

Les distributions singulières, dénommées aussi vortices optiques, de charge topologique (ordre azimutal) $\ell$, dans lesquelles la phase varie de 0 à $2\pi \ell$, autour de la direction de propagation, $\ell$ étant un multiple entier.

Les distributions d'amplitude à variation azimutale d'ordre $\ell$, dénommées aussi distribution de Laguerre-Gauss, Les distributions de polarisation et optionnellement de phase à variation azimutale d'ordre $\ell$ dénommées aussi modes de Laguerre-Gauss polarisés radiatement.
Deux distributions lumineuses compactes, seront réputées de familles topologiques différentes si elles remplissent au moins une, et n'importe laquelle, des conditions suivantes :

L'une est régulière et l'autre est singulière,

L'une est ponctuelle et l'autre est annulaire,

Les ordres azimutaux $\ell$ de l'amplitude des deux distributions lumineuses diffèrent,

Les ordres azimutaux f de la polarisation ou de la phase des deux distributions lumineuses diffèrent.

Alternativement, deux distributions lumineuses projetées sur un volume donné seront réputées de topologies différentes si dans une partie conséquente de la surface illuminé conjointement, les gradients sont de direction inversée.
Les fluorophores sont l'exemple le plus connu de la famille des nanoémetteurs lumineux, émetteurs ponctuels de taille sensiblement inférieure à la limite de diffraction. Un nanoémetteur lumineux est un petit émetteur secondaire, attaché à un objet; il est de taille sensiblement inférieure à une fraction de longueur d'onde, typiquement mais non limité à une taille inférieure à un cinquième de la longueur d'onde ; un nanoémetteur lumineux absorbe l'énergie incidente et réémet de la lumière à la même longueur d'onde que la lumière incidente ou à des longueurs d'onde différentes ; la lumière émise par le nanoémetteur peut être cohérente, partiellement cohérente ou incohérente avec la lumière absorbée. Les principaux exemples de nanoémetteurs lumineux sont les fluorophores et les nanoparticules, mais ils incluent aussi un grand nombre d'autres éléments.
La définition, dans le contexte de l'invention, des nanoémetteurs lumineux est, déterminée par les deux conditions suivantes :

Création d'un émetteur lumineux secondaire ponctuel, et

Positionnement prédéterminé de cet émetteur relativement à une entité, biologique ou organique.

Les mécanismes physiques qui peuvent créer un nanoémetteur sont nombreux ; ils incluent mais ne sont pas limités à l'absorption, la diffusion ou la réflexion, la fluorescence, « émission-déplétion », [7], les phénomènes de photo activation [8, 9], la fluorescence à deux ou plusieurs photons, [10], la diffusion élastique ou non, la diffusion Raman, ou à d'autres mécanismes physiques connues de l'Homme de l'Art. Nous utiliserons le terme émission de lumière pour décrire l'émission d'ondes électromagnétiques par le nanoémetteur lumineux, que la lumière soit cohérente, incohérente ou partiellement cohérente.

Nous étendrons notre définition des nanoémetteurs, en y incluant les particules diffusantes, absorbantes et réfléchissantes, attachées à une entité biologique ou organique ; l'action d'une particule diffusante, réfléchissante ou absorbante sur le champ électromagnétique peut en effet être décrite comme la création avec une phase inverse, suivant le principe de Babinet, pour une particule absorbante d'un champ secondaire auxiliaire, émergent de la particule, superposé au champ électromagnétique incident.

Nous nous référerons dans ce brevet aux descripteurs d'un fluorophore unique pour dénoter l'ensemble d'information décrivant un fluorophore en tant que source ponctuelle, à un instant déterminé. Etant donné que le nanoémetteur est considéré comme une source ponctuelle, l'ensemble de l'information le représentant contient un nombre limité de paramètres, soit : sa position dans l'espace, son intensité, les caractéristiques spectrales, d'intensité, de cohérence, de phase et de polarisation de la lumière émise par le fluorophore, en fonction de la lumière incidente.

Toutefois, dans la majorité des cas, et dans la description de l'invention, nous nous referons, sous la désignation de descripteurs, à un sous-ensemble des descripteurs d'un fluorophore comprenant sa position géométrique, son intensité, et le type du fluorophore, lorsque plusieurs populations de nanoémetteurs lumineux, différenciées par exemple par leur spectre d'émission, sont présentes dans un même échantillon. Cette simplification utilisée dans la description n'altère pas le domaine de l'invention qui inclura dans son champ d'application l'intégralité des descripteurs des nanoémetteurs lumineux.

Pour simplifier la compréhension du contexte de l'invention, la suite de la description référence seulement le cas le plus simple, celui dans lequel le nanoémetteur est un fluorophore et l'interaction physique est la fluorescence à un photon. Pourtant, cette description doit être comprise comme une illustration simplifiée d'une description générale des méthodes et concepts applicables à l'ensemble des nanoémetteurs lumineux cités préalablement ou connus de l'Homme de l'Art, quel que soit le phénomène physique sous-jacent.

Il est marquant que le nanoémetteur lumineux échantillonne le champ ou l'intensité incidente à une position tridimensionnelle précise, sans influence de l'ensemble de la distribution spatiale de l'intensité incidente. Nous référencerons cette propriété remarquable dans ce document comme la capacité d'échantillonnage du nanoémetteur lumineux,

On se réfère de nouveau à la Figure. 1 ; l'ensemble des fluorophores positionnés sur un objet biologique donné, 16 et 19 d'une part et 17 et 18 d'autre part, sont référencés comme des « objets biologiques lumineux »; ils représentent une carte de l'objet biologique, dans le sens défini par Alfred Korzybski en sémantique générale, [11]. Il est toutefois de pratique courante pour simplifier la description, de référencer l'objet biologique lumineux comme l'objet biologique-lui-même, lorsqu'aucune ambigüité ne peut apparaitre.

L'objet biologique lumineux contient de nombreuses informations pertinentes liées à l'objet biologique, principalement l'information spatiotemporelle, la position de l'objet et son orientation en fonction du temps, et l'information morphologique, par exemple dans le cas de la scission d'une cellule en deux.

L'information primordiale, la carte dans la terminologie de la sémantique générale, est l'ensemble des descripteurs des fluorophores et leur évolution en fonction du temps. Les informations géométriques et biologiques ne seront que des extrapolations de cette information primordiale.

Le système de mesure permettra de calculer, une évaluation des descripteurs des fluorophores, la carte mesurée. Cette carte mesurée, diffère de la carte originale, en raison du bruit, des conditions de mesure, des limites du système ou de l'incertitude de mesure. Cette information carte peut être élaborée ultérieurement en différents niveaux d'abstraction.

La carte, le niveau de base consiste donc en une évaluation des descripteurs d'un ensemble de fluorophores, cette information peut, par exemple être structurée sous la forme d'une liste de fluorophores et de leurs descripteurs. Ce niveau d'abstraction, qui décrit les résultats directs de la mesure, ne contient, à priori, aucune information biologique mais les résultats d'une mesure physique décrite par des points lumineux, qui pourrait d'ailleurs représenter n'importe quelle entité marquée.

Le second niveau, le niveau d'abstraction géométrique structure les nanoémetteurs sous forme d'objets géométriques. Il consiste en une description d'objets lumineux et de leurs caractéristiques dynamiques, telles que leur position ou orientation, ou leur morphologie. A ce niveau, l'information est encore une information physique et géométrique décrivant un ensemble d'objets. L'information géométrique utilise la carte mesurée et une information auxiliaire, potentiellement extérieure au système, sur la relation entre les points lumineux et des objets.

Le niveau d'abstraction biologique, permet une certaine appréhension de la réalité biologique grâce à une relation constitutive entre les objets mesurés et des entités biologiques correspondantes. Il contient un ensemble d'informations sur l'objet biologique, principalement la position et sa dynamique, sa forme et sa morphologie. L'information biologique utilise la carte mesurée et l'information géométrique, et une information auxiliaire, potentiellement extérieure au système, sur la relation des points lumineux et des objets aux entités biologiques. Un certain nombre de conclusions sur la fonctionnalité biologique de l'échantillon peut être obtenues à ce niveau.

La réfraction conique, est un phénomène optique prédit par Hamilton, (12), en 1832, et confirmé expérimentalement deux mois après par Lloyd, (13, 14). La réfraction conique décrit la propagation d'un faisceau de lumière dans la direction de l'axe optique d'un cristal biaxe. Hamilton a prédit que la lumière émerge sous la forme d'un cône creux de rayons. La réfraction conique est une étape importante de l'histoire des sciences et a joué un rôle dans la démonstration de la théorie des ondes électromagnétiques.

Un regain d'intérêt pour la réfraction conique eu lieu dans les dernières années du XXe siècle ; elle a abouti à une théorie complète par Berry et al. (15), (16, 171, validé expérimentalement en 2009, (18). Nous suivons ici la théorie, la terminologie et les définitions de Berry, y compris le changement de dénomination de l'effet physique, à partir de ce point, utilisant le terme plus rigoureux de diffraction conique.

La diffraction conique a suscité un intérêt considérable au niveau théorique et expérimentale, mais, "aucune application pratique semble avoir été trouvé", [19].

Historiquement, la diffraction conique a été observée dans les cristaux biaxes. Nous nous référons à un cristal conique pour décrire un cristal biaxe inorganique ou organique, présentant le phénomène de diffraction conique. Quelques exemples non limitatifs de cristaux biaxes comprennent, l'Aragonite, KTP, KTA, LBO, KNO3, MDT, YCOB, BIBO, DAST, POM, NPP, LAP, LiIn$2 et LiInSe2.

D'autres effets existent, créant une diffraction conique intrinsèquement plus faible ou des effets créant une diffraction conique le long d'un trajet optique court. Ces effets comprennent les polymères, les cristaux liquides et les effets de biréfringence induite par voie externe. Les polymères comprennent mais ne sont pas limités à : les feuilles de polymère étirées et à la polymérisation en cascade, [20]; les cristaux liquides comprennent mais ne sont pas limités à: la phase nématique biaxe thermotrope, [21]; les effets externes de biréfringence induite comprennent, mais ne sont pas limités à: l'application d'un champ électrique créant un effet électro-optique, sur un cristal cubique non centrosymétrique, (22), et le modulateur photo-élastique, [23].

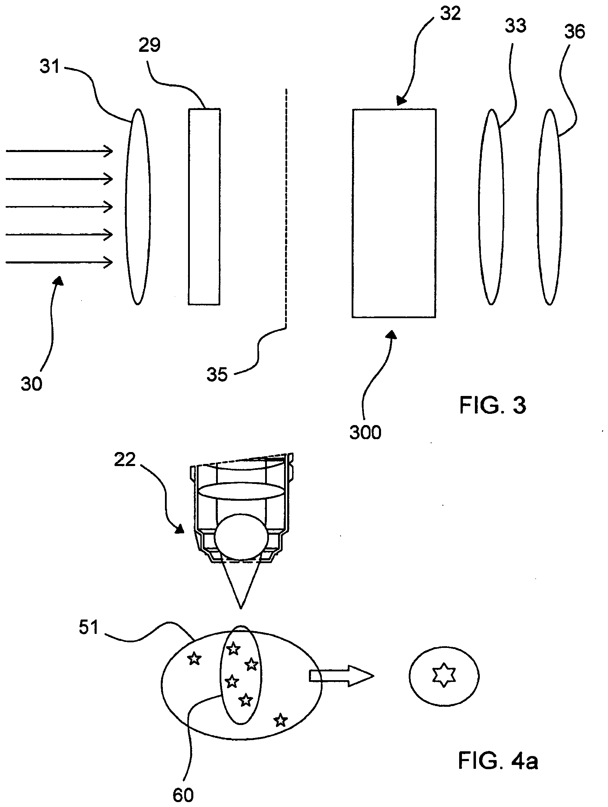

On se réfère maintenant à la figure 3, qui est une illustration schématique simplifiée d'une configuration d'un module de diffraction conique, 300.

La lumière incidente, 30, est supposée être parallèle, même si d'autres conditions peuvent être adaptées en utilisant des moyens optiques simples. Le setup lui-même comprend une première lentille, 31, un cristal conique, 32 et une lentille optionnelle 33. Les deux premières lentilles, 31 et 33, sont configurées de préférence sous forme d'un télescope Kepler 1 :1. L'ouverture numérique de la première lentille, 31, dans l'espace image, représentée ci-dessous par Uo, détermine les paramètres de l'effet conique à travers le rayon conique, défini ci-dessous. Un plan d'imagerie conique, 35, est placé au plan focal de la première lentille 31 ; un polariseur partiel, 29, décrit ci-dessus, peut également être ajouté. Une lentille de focalisation, 36, détermine l'échelle finale de la tache lumineuse. Elle peut être un objectif de microscope externe, ou peut être fusionnée avec la seconde lentille 33, telle qu'implémentée dans une autre modalité de cette invention. La répartition de la lumière projetée sur l'échantillon est, en première approximation, en négligeant les effets vectoriels, une image réduite de la distribution de la lumière dans le plan image. L'influence des effets vectoriels sera discutée ci-dessous. Le rapport d'échelle est déterminé pour un objectif de microscope par son grossissement.

Soit la variable spatiale, R, au plan d'imagerie conique, et le vecteur d'onde. U, représentées en coordonnées cylindriques par R, $\theta_R$ et U, $\theta_U$. Soit $\lambda$, la longueur d'onde de la lumière.

Le comportement du champ électrique émergeant du cristal conique 32 est entièrement caractérisé par un seul paramètre, le rayon conique, Ro; le rayon conique dépend du matériau et les caractéristiques géométriques du cristal, comme défini dans [Berry, 2004).

Nous introduisons des paramètres normalisés permettant à la description ci-dessous de la répartition de la lumière, d'être valide à la fois au plan d'imagerie conique et au foyer de l'objectif du microscope, dans les limites de la théorie scalaire de diffraction.

La position radiale normalisée, $\rho$, le vecteur d'onde normalisée, u, représentés en coordonnées cylindriques par $\rho$, $\theta_R$ et u, $\theta_U$, et le rayon normalisé conique, $\rho_o$, sont donnés par:

$$\rho = 2\frac{R}{\lambda}U_0, \qquad u = \frac{U}{U_0}; \qquad \rho_0 = 2\frac{R_0}{\lambda}U_0. \qquad \text{(EQ. 4)}$$

Uo étant l'ouverture numérique du système. Pour po<2, nous faisons référence ici à un cristal conique mince;

pour po <<1, nous nous référons ici à la forme d'un cristal conique mince linéaire, et pour po <0.5 à un cristal conique mince sinusoïdal.

L'onde émergeante du cristal conique mince, $E(\rho, \theta_R)$, exprimée en coordonnées normalisées, est constituée par la superposition de deux ondes, référencées ici comme l'onde fondamentale, $E_F(\rho)$, une onde régulière, et l'onde vortex, $E_V(\rho, \theta_R)$, une onde singulière; ces deux ondes sont cohérentes l'une avec l'autre, collocalisées, polarisées circulairement et de chiralité inverse :

$$\mathbf{E}(\rho, \theta_R) = \mathbf{E}_F(\rho) + \mathbf{E}_V(\rho, \theta_R) = E_F(\rho)\begin{pmatrix} 1 \\ -i \end{pmatrix} + F_V(\rho)\exp(-i\theta_R)\begin{pmatrix} 1 \\ i \end{pmatrix} \quad \text{(EQ. 5)}$$

Dans cette équation, $E_F(\rho)$ est l'amplitude fondamentale scalaire, $Fv(\rho)$ est l'amptitude scalaire de vortex réduite; elles sont donnés par:

$$E_F(\rho) = 2\pi \int du\, u \cos(\rho_0 u) J_0(\rho u); \quad F_V(\rho) = 2\pi \int du\, u \sin(\rho_0 u) J_1(\rho u). \quad \text{(EQ. 6)}$$

Pour un cristal conique mince linéaire, l'onde fondamentale peut être approximée par une tache d'Airy et l'onde de vortex peut être approximée à un vortex linéaire, représenté par:

$$F_V(\rho) = 2\pi\rho_0 \int du\, u^2 J_1(\rho u). \quad \text{(EQ. 7)}$$

En supposant que l'action du polariseur partiel, 29, est la réduction de l'amplitude de l'onde vortex par un facteur a, les paramètres de Stokes peuvent être déduits des équations précédentes :

$$\text{(EQ. 8)}$$

$$S_0 = \left(E_F(\rho)\right)^2 + \left(\alpha^2 F_V(\rho)\right)^2$$
$$S_1 = 2\alpha E_F(\rho) F_V(\rho)\sin\theta_R; \quad S_2 = 2\alpha E_F(\rho) F_V(\rho)\cos\theta_R;$$
$$S_3 = \left(E_F(\rho)\right)^2 - \left(\alpha^2 F_V(\rho)\right)^2$$
$$\beta = \theta_R;$$

Nous utiliserons les termes d'un objet clairsemé « sparse object » en anglais, pour décrire un ensemble d'émetteurs lumineux ponctuels, d'un nombre inférieur à douze, positionné dans un volume dont la taille, dans chacune des dimensions, est inférieure à 3 longueurs d'ondes, à la longueur d'onde d'émission ou de réflexion des émetteurs. Le volume de taille inférieure à 3 longueurs d'ondes, qui contient l'objet clairsemé, sera référencé comme un volume d'analyse de taille réduite.

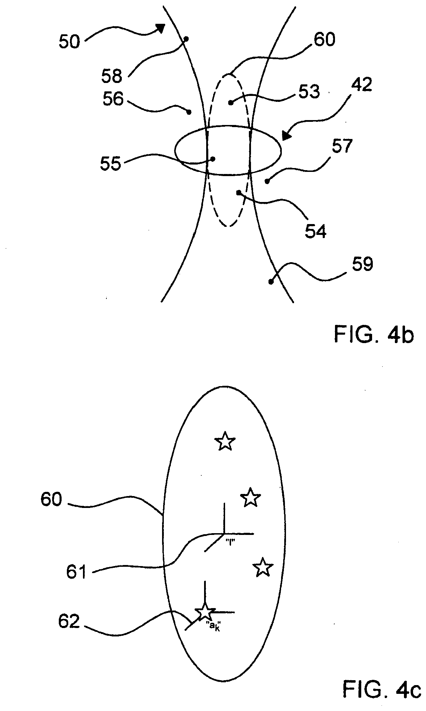

On se réfère maintenant aux figures 4a à 4c qui sont une représentation simplifiée du concept de confinement volumique du microscope confocal.

La fonctionnalité du confinement volumique est de limiter, dans les trois dimensions spatiales, la région observée de l'échantillon à un volume de taille la plus petite possible, le volume d'analyse. La fonctionnalité du confinement volumique limite le volume d'analyse par la combinaison de deux effets : le confinement de la lumière projetée sur une petite surface, idéalement de la taille de la tâche d'Airy, 50, et l'élimination de la lumière défocalisée par le trou confocal, 28 de la Figure 2. La superposition de ces deux effets crée un petit volume, le volume d'analyse, 60. Ce volume détermine la taille de la cellule élémentaire détectée par le système.

Considérons un objet clairsemé, 51, consistant en un ensemble de fluorophores, 53 à 59. Les fluorophores 53 à 55 positionnés dans le volume d'analyse 60, et seulement eux, sont à la fois excités par la source lumineuse et les photons émis par eux arrivent au module du détecteur. Les fluorophores ne se trouvant pas dans le cône d'éclairage, 56 et 57, ne sont pas illuminés par la lumière incidente. La lumière émise par les fluorophores 58 et 59 ne se trouvant au plan conjugué du trou confocal, 28 de la Figure 2, est bloquée, presque intégralement, par le trou confocal, 28 de la Figure 2.

Deux repères cartésiens différents sont définis dans le système, Figure 4c:
Le référentiel « i »: Les axes référencés « i » représentent un repère cartésien centré sur le centre du volume d'analyse, 61.

Le référentiel « a » : Les axes référencés « ont » représenté un repère cartésien centré, pour chaque nanoémetteur lumineux, sur le nanoémetteur lumineux considéré comme un point discret, 62,

Lorsque, en utilisant la méthode PSIT décrite ultérieurement, on projette un vortex sur l'échantillon, le centre du vortex sera en général défini comme le centre du volume d'analyse.

Le microscope confocal permet de limiter le volume d'analyse en utilisant le confinement volumique décrit précédemment. Le confinement volumique est obtenu par la combinaison de deux effets : le confinement de la lumière projetée sur une petite surface, idéalement de la taille de la tâche d'Airy, 50, et l'élimination de la lumière défocalisée, par le trou confocal, 41. La superposition de ces deux effets crée un petit volume, le volume d'analyse, 60. Ce volume détermine la taille de la cellule élémentaire détectée par le système.

Au moins un mode de réalisation de l'invention, qui sera décrit ci-dessous, utilise la diffraction conique pour réaliser les modules optiques fondamentaux de la technique. Toutefois, des implémentations alternatives, remplaçant les modules basés sur la diffraction conique, par des modules basés sur d'autres concepts optiques, sont en mesure de fournir les mêmes fonctionnalités. Elles font partie du champ de cette invention. Les concepts optiques alternatifs comprennent mais ne sont pas limités aux cristaux uniaxes, aux réseaux à pas inférieur à la longueur d'onde, « subwavelength gratings », aux modes de laser structurés, aux composants holographiques et à d'autres techniques connues de l'Homme de l'Art,

Ces concepts, techniques et dispositifs optiques et optoélectroniques, sont connus de l'Homme du métier et l'ensemble de ces moyens optiques sont décrits dans de nombreuses publications, comme par exemple le livre écrit par D. Goldstein, «Polarized light», (25), le « Handbook of Confocal Microscopy », [26], le « Handbook of Optics », [27], et de nombreuses autres publications connues de l'Homme de l'Art. 20

## Acronymes

Nous utiliserons dans ce document l'acronyme, SRCD, « Super Resolution using Conical Diffraction » pour nommer la plateforme, les modules et systèmes spécifiques à l'implémentation préférée de cette invention.

Nous utiliserons dans ce document l'acronyme, PSIT, méthode de projection d'une séquence d'intensités lumineuses différant topologiquement, soit en anglais : « Projected Sequence of Intensities with various Topologies »

Nous utiliserons dans ce document l'acronyme, PDOS, sémaphore optique à dépendance spatiale, soit en anglais : « Position Dépendent Optical Semaphore » ; l'utilisation de la méthode PDOS est référencée dans des inventions de la même famille.

La plateforme SRCDP, « Super Resolution using Conical Diffraction Platform », est une plateforme de Microscopie implémentant la méthodologie de mesure en utilisant des modules optiques basés sur la diffraction conique. La plateforme SRCDP est l'implémentation préférée de la Méthodologie de mesure

Nous utiliserons dans ce document l'acronymie, LatSRCS pour nommer le niodule optique implémentant la méthode PSIT à l'implémentation préférée de cette invention.

Nous utiliserons dans ce document l'acronyme, LongSRCS pour nommer le module optique implémentant méthode PDOS à l'implémentation préférée de cette invention. l'utilisation du module LongSRCS est référencée dans des inventions de la même famille.

## DESCRIPTION DETAILLEE DES MODES DE REALISATION PREFERES

Des modes de réalisation de la présente invention consistent en une nouvelle méthodologie de mesure, la méthodologie de mesure, et un ensemble cohérent de méthode systémiques et algorithmiques, d'outils matériels, d'outils algorithmiques et logiciels permettant son implémentation.

La méthodologie de mesure selon des modes de réalisation permet l'acquisition optique de données nanométriques et d'images de superrésolution. La méthodologie de mesure est principalement, mais non exclusivement, utilisée pour la mesure de données superrésolues d'échantillons biologiques marqués par des fluorophores.

La méthodologie de mesure peut être implémentée en utilisant différents procédés de mesure et de traitement algorithmique, décrites ci-dessous. Entre autres, la méthodologie de mesure, dans cette invention, est implémentée en utilisant la nouvelle méthode de mesure, référencée :

- PSIT, méthode de projection d'une séquence d'intensités lumineuses différant topologiquement, soit en anglais : « Projected Sequence of Intensities with various Topologies »

Certains modes de réalisation de l'invention concernent aussi un système - une plateforme de microscopie - implémentant la méthodologie de mesure en utilisant la méthode de mesure PSIT. Ce système, la plateforme SRCDP, « Conical Diffraction based Super Resolution Platform », est l'implémentation préférée de la méthodologie de mesure.

La plateforme SRCDP, consiste principalement, dans cette invention, en un module matériel, un module optique nouveau, le module optique LatSRCS, monté sur un microscope, et un module algorithmique, SRCDA, permettant de reconstruire l'information superrésolue de l'échantillon. De plus la plateforme SRCDP, inclue un module de détection amélioré, un module de contrôle du système, et un support informatique et logiciel.

La méthodologie de mesure peut consister en l'utilisation conjointe des deux méthodes de mesure, les méthodes PSIT et PDOS. Toutefois, dans cette invention, l'utilisation de la méthode PDOS n'est pas nécessaire ; nous nous référerons dans ce cas à la méthodologie de mesure simplifiée, qui est utilisée dans cette invention.

Certains modes de réalisation de l'invention concernent aussi des méthodes d'utilisation de la méthodologie de mesure pour la mesure de distribution de fluorophores et de fluorophores, et du suivi en deux ou trois dimensions de fluorophores.

De plus, certains modes de réalisation de l'invention concernent un nombre important de variantes d'implémentations de la méthodologie et des méthodes PSIT et PDOS, de la plateforme SRCD, du modules optique LatSRCS et de l'algorithmique, SRCDA.

La fonctionnalité du microscope confocal, décrite par Minsky, (24), et explicité antérieurement, est de limiter, dans les trois dimensions spatiales, la région observée de l'échantillon à un volume de taille la plus petite possible, le volume d'analyse.

En corollaire, dans un microscope de fluorescence confocal, l'information acquise est une valeur unique d'intensité pour l'ensemble du volume d'analyse, conçu comme une entité unique. Plus clairement, l'information détaillée de la position des fluorophores à l'intérieur du volume d'analyse n'est pas accessible, à priori, dans un microscope confocal. Il était généralement admis qu'aucune information optique additionnelle ne pouvait être créée qui aurait permis une discrimination supplémentaire à l'intérieur du volume éclairé.

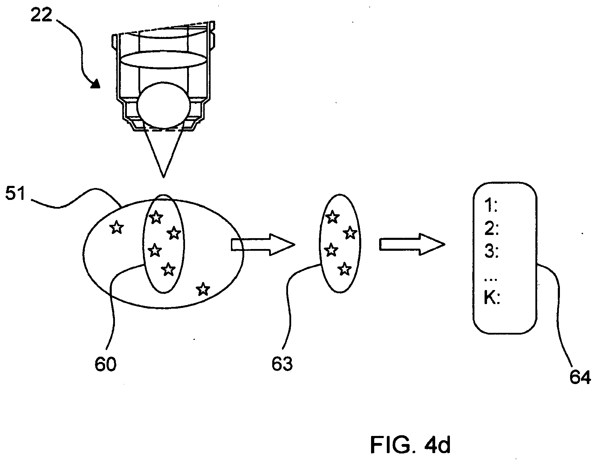

On se réfère maintenant à la Figure 4d, qui est une représentation conceptuelle simplifiée du paradigme de mesure de la méthodologie selon au moins un mode de réalisation de l'invention. Le paradigme de mesure de cette méthodologie est beaucoup plus ambitieux que celui du microscope confocal de fluorescence, représenté schématiquement dans la Figure 4a.

Dans la figure. 4d, un volume d'analyse, 60, est créé au plan focal de l'objectif du microscope, 22 ; il contient un objet clairsemé, 51, consistant en plusieurs fluorophores, 53 à 59 ; le résultat du système implémentant la méthodologie est un objet clairsemé reconstruit, 63, et une liste des fluorophores et une liste de leurs attributs, 64.

Un système implémentant la méthodologie selon au moins un mode de réalisation de l'invention est capable de récupérer de manière indépendante et avec précision les attributs de plusieurs fluorophores dans un volume lumineux de dimension similaire à celle de la microscopie confocale. Pour atteindre cet objectif, la méthodologie selon des modes de réalisation de l'invention est conçue pour créer optiquement pour chaque volume éclairé, une grande quantité d'informations, dans les deux domaines temporel et spatial.

Le processus le plus développé de la méthodologie de mesure peut être segmenté en sept étapes, cinq étapes optiques, une étape de détection optoélectronique et une étape algorithmique.

Étapes optiques :

- Projection d'une séquence de distributions lumineuses compactes de topologies différentes, sur le volume d'analyse
- Émission de lumière fluorescente par les fluorophores
- Imagerie des fluorophores sur le plan focal
- Séparation, de la lumière réémise en plusieurs canaux indépendants détectés simultanément et/ou séquentiellement
- Optionnel limitation dans le plan focal de la lumière analysée

Étape de détection

- Détection de l'intensité lumineuse par un ou plusieurs détecteurs photoélectriques ponctuels ou matriciels

Étape algorithmique :

- Reconstruction de la liste de fluorophores, constituant l'objet clairsemé, et de leurs attributs à partir de l'ensemble des images détectées,

Suivant le mode de réalisation de la présente invention, la méthodologie de mesure consiste en la réalisation des étapes optiques décrites antérieurement, en omettant la quatrième étape optique,
Le processus optique composé implémentant la méthodologie comprend la réalisation d'une série de processus optiques de mesure, contrôlés par le module de contrôle du système, en variant les séquences d'illumination et/ou les fonctionnalités des canaux et/ou la position de la séquence d'illumination en fonction de données mesurées ou d'information externes. Un exemple de processus optique composé implémentant la méthodologie selon un mode de réalisation de l'invention sera détaillée ci-dessous.

Le résultat intermédiaire, l'information brute, est obtenu à l'issue de l'étape de détection. L'information brute consiste en un ensemble d'images $Aop(m,n)$, représentant pour la distribution lumineuse o, l'image issue du canal de détection p.

Comme dans un microscope confocal, le processus de mesure analyse un volume de petite taille dans un objet de taille beaucoup plus grande. Il nécessitera donc l'ajout de modules supplémentaires, similaires à ceux d'un microscope confocal incluant un processus de balayage, un module logiciel d'intégration, d'analyse et de visualisation des données ponctuelles en surfaces et/ou en objets tridimensionnel.

Une méthode de mesure PSIT selon un mode de réalisation de l'invention, projette une séquence de distributions lumineuses de topologies différentes, sur le volume d'analyse.

La méthode de mesure PSIT, réalise les fonctions suivantes :

- Projection d'une séquence, la séquence d'émission, de distributions lumineuses compactes de familles topologiques différentes sur un échantillon,; et
- Pour chaque distribution lumineuse compacte :

  - émission de lumière par les fluorophores de l'échantillon,

  - création, à l'aide de l'optique du microscope, d'une image optique,

  - acquisition de l'image optique par un détecteur photoélectrique et création d'une image numérique.

Plus en détails, il est à noter que :
La séquence d'émission consiste en, au moins deux, distributions lumineuses ponctuelles, de familles topologiques différentes

La séquence d'émission est projetée sur un échantillon biologique marqué par des fluorophores, référencés comme nanoémetteur lumineux. L'émission lumineuse émergente de chaque nanoémetteur lumineux est dépendante, pour chaque nanoémetteur lumineux, de l'intensité, cas incohérent, ou du champ électromagnétique cas cohérent, incidents à la position spatiale, tridimensionnelle du nanoémetteur lumineux susdit propriété d'échantillonna lumineux discutée préalablement.

Pour chaque distribution lumineuse de la séquence d'émission projetée sur l'échantillon, une image optique est créée. L'ensemble des images correspondantes à l'ensemble des distributions lumineuses de la séquence d'émission est référencé comme la séquence d'images.

La méthode PSIT selon ce mode de réalisation permet d'acquérir une information essentiellement latérale, c'est-à-dire la position latérale chacun des fluorophores.

Dans un mode de réalisation préféré, la méthode PSIT est implémentée par la projection de distributions lumineuses de topologies différentes créées par diffraction conique et modifiées par une variation des états de polarisation d'entrée et de sortie.

Mathématiquement, le procédé selon des modes de réalisation de l'invention réalise une fonction de transfert transformant la distribution spatiale dans l'espace des fluorophores en l'information brute consistant en un ensemble d'images. L'algorithmique réalise l'opération inverse : elle reconstruit la distribution spatiale dans l'espace des tluorophores à partir de l'ensemble d'images coniposant l'information brute.

En termes mathématiques l'algorithmique résout un problème inverse ou d'estimation de paramètres. Les équations du modèle sont connues et le nombre de fluorophores dans un objet clairsemé est limité à priori. On peut donc utiliser l'ensemble des procédures mathématiques connues de l'Homme du métier, pour la résolution de problèmes inverses ou l'estimation de paramètres. Nous décrivons ultérieurement un exemple d'algorithmique adapté spécifiquement à la méthodologie de mesure selon un mode de réalisation de l'invention.

Nous présentons, pour sa valeur emblématique, une solution nouvelle du problème de la discrimination de deux points positionnés à faible distance l'un de l'autre. Ce problème, étudié par Lord Rayleigh, est la base du critère de résolution dans de nombreux domaines de l'Optique.

Il a ainsi été décrit, de manière assez large, les caractéristiques de l'invention afin que la description détaillée de celle-ci puisse être mieux comprise, et afin que la présente contribution à l'art puisse être mieux appréciée. De nombreuses fonctionnalités supplémentaires de l'invention seront décrites ci-après.

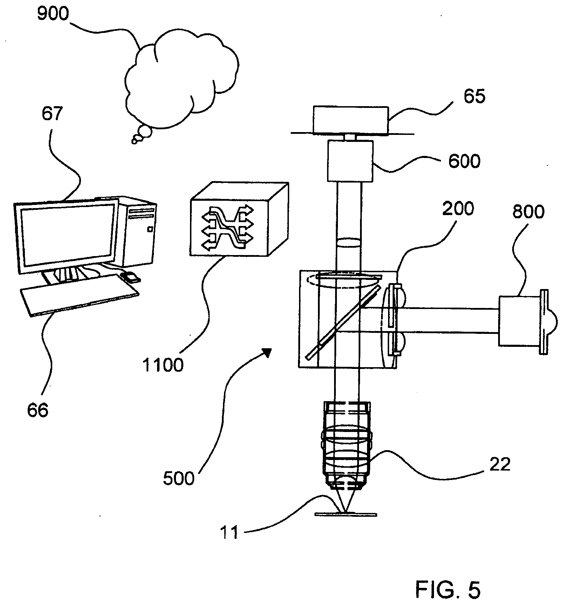

L'implémentation préférée de la méthode selon un mode de réalisation de l'invention est une plateforme matérielle et algorithmique, référencée comme la plateforme SRCDP, 500, illustré à la Figure 5.

La plateforme SRCDP, 500, implémente la méthode selon un mode de réalisation des inventions de cette famille, en combinant les deux méthodes PSIT et PDOS décrites ci-dessus. Toutefois, dans l'invention présente, la méthode PDOS n'est pas utilisée.

La plateforme SRCDP observe, Figure 5, un échantillon biologique, 11, intégrant un ensemble de fluorophores. Le résultat de l'observation de l'échantillon biologique par la plateforme SRCDP est l'acquisition d'information de superrésolution, représentative de l'échantillon observé.

La plateforme SRCDP, 500, Figure 5, comprend principalement :

Dans sa partie matérielle :

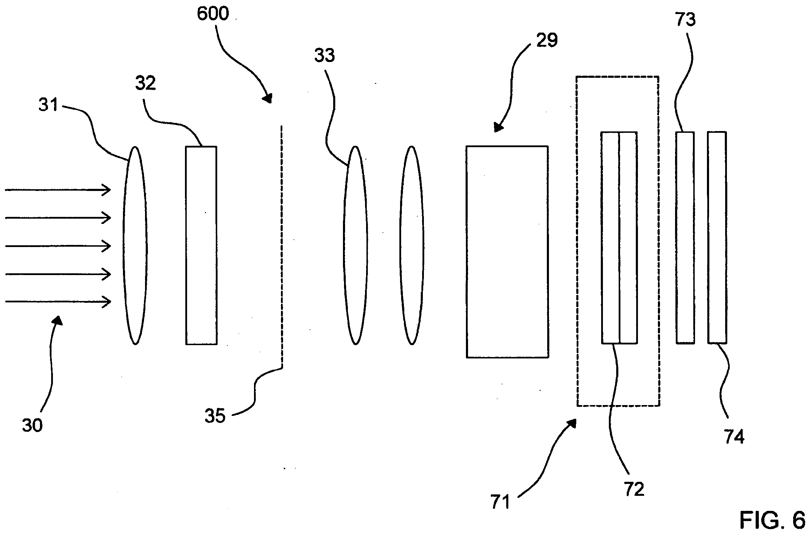

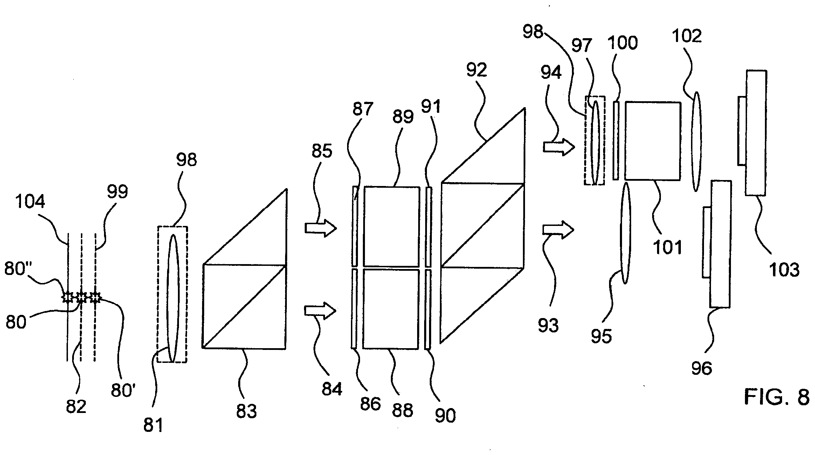

- Un microscope confocal 200, adapté ou optimisé, similaire au microscope confocal, décrit antérieurement, et comprenant l'ensemble des composants adéquats, tel que décrit antérieurement
- Deux modules optiques nouveaux et complémentaires, montés sur un microscope standard. Les deux modules optiques nouveaux sont les modules optiques LatSRCS, 700, et LongSRCS, 800, dont le premier est décrit en détails ultérieurement en se référant à la Figure 6. Le module optique LatSRCS 700, implémente les étapes d'illumination nécessaires à l'implémentation de la méthode PSIT selon un mode de réalisation de l'invention. Toutefois, dans l'invention présente, le module LongSRCS, 800, n'est pas nécessaire.;
- Le module algorithmique SRCDA, 600, qui sera décrit en se référant à la Figure 8, est capable, à partir des images créées par la plateforme SRCDP de reconstruire l'information de superrésolution de l'échantillon biologique. D'autres éléments auxiliaires, tels que l'ordinateur 66 et le logiciel 67, nécessaires à la réalisation de la plateforme,

**Module optique LatSRCS implémentant la méthode PSIT**

Nous décrivons, en se référant à la figure 6, un module optique selon un mode de réalisation de l'invention, le module optique LatSRCS, 700, et sa fonction spécifique en microscopie.

Le module optique, LatSRCS, 700 selon ce mode de réalisation est un module optique, projetant sur une pluralité de fluorophores d'un échantillon, une séquence de distributions lumineuses compactes de topologie différente. Chaque fluorophore fluoresce avec une séquence d'intensités fluorescentes lumineuses dépendant de l'intensité incidente sur le fluorophore et caractérisant la position latérale du fluorophore. Dans la plupart des modes de réalisation, les distributions lumineuses compactes de topologies différentes sont créées par l'interférence, avec des amplitudes et phases variables entre une onde ordinaire et une onde singulière. Dans le mode de réalisation préféré, les ondes régulière et singulière sont créées par un cristal conique mince.

Le module optique LatSRCS, 700, est positionné dans la voie d'éclairage du microscope confocal 200 ; il projette une séquence de distributions lumineuses compactes de topologies différentes sur l'échantillon 11 en utilisant l'objectif du microscope confocal 200. Dans le mode de réalisation préféré utilisant la diffraction conique, l'intensité incidente à une position spécifique sur l'échantillon sera proportionnelle, pour chaque distribution lumineuse, à une combinaison spécifique des paramètres de Stokes.

Le module optique LatSRCS, 700, utilise une fonctionnalité inhérente, décrite précédemment, spécifique au fluorophore, qui échantillonne l'intensité lumineuse incidente à sa position précise (du fluorophore) et réémet une lumière fluorescente dépendante de la lumière incidente. Il est remarquable que l'information mesurée soit directement liée à la position du fluorophore à l'intérieur de la distribution lumincuse compacte, relayée par les paramètres de Stokes. Cette information est figée par la fonctionnalité du fluorophore, sa propriété d'absorber et de réémettre la lumière, qui rompent la chaîne optique. Cette information est portée par la lumière fluorescente, sous forme d'une distribution lumineuse émergente, récupérable par un ensemble de détection 65.

Si la lumière incidente varie dans le temps en fonction d'une séquence de distributions lumineuses compactes de topologies différentes, l'intensité de la lumière fluorescente réémise varie dans les mêmes proportions. La séquence de la lumière fluorescente réémise sera proportionnelle à la séquence des distributions lumineuses compactes de topologies différentes. A partir de cette information, il est possible de récupérer la position du fluorophore, comme expliqué ci-dessous.

La méthode PSIT selon des modes de réalisation de l'invention fait référence à la projection d'une séquence de distributions lumineuses compactes de topologies différentes dans un microscope, l'interaction avec les fluorophores, la collecte de la lumière réémise par l'objectif du microscope, 22, la détection de la lumière fluorescente par l'ensemble de détection amélioré 65, et l'analyse de l'information par un algorithme approprié. Dans certains modes de réalisation, l'ensemble de détection amélioré, 65, se compose d'un détecteur unique, et ne récupère que l'intensité globale en fonction du temps, tandis que dans d'autres modes de réalisation, l'ensemble de détection amélioré se compose d'une petite zone de pixels et récupère aussi la répartition spatiale de la lumière fluorescente. L'ensemble des informations récupérées, consistant en une pluralité d'inages, désigné comme les images latérales de superrésolution.

Dans un mode de réalisation préféré, la contribution d'un fluorophore positionné dans le volume éclairé à une image latérale de superrésolution spécifique est proportionnelle à une combinaison des paramètres de Stokes de la lumière incidente à la position du fluorophore.

Les images latérales de superrésolution, l'information créée par les distributions lumineuses compactes de topologies différentes est nouvelle, et n'était pas présente dans l'art antérieur. Cette information nouvelle permet d'affiner la position des fluorophores, de quantifier le nombre de fluorophores présents dans le volume éclairé et de différencier plusieurs fluorophores présents dans le même volume.

On se réfère maintenant à la figure 6, qui est une illustration schématique simplifiée d'un module optique LatSRCS, 700, conformément à un mode de réalisation de la présente invention.

La figure 6 représente un module optique, LatSRCS, 700, il inclut tous les composants du module de diffraction conique, de la figure 3, qui sont mis en œuvre de la même manière que dans le module de diffraction conique 300. L'optique de la source lumineuse du microscope confocal à balayage est supposée être en conjugaison infinie, même si d'autres conditions peuvent être adaptées en utilisant une optique auxiliaire. La lumière incidente, entrant depuis la source lumineuse est parallèle, 30. Le module optique 700 lui-même comprend une première lentille, 31, un cristal conique 32, et une seconde lentille 33 ; un polariseur partiel, 29, décrit ci-dessus, peut également être ajouté. Les deux premières lentilles, 31 et 33, sont configurées de préférence sous forme d'un télescope de Kepler de rapport 1:1; le plan d'imagerie conique, 35, est placé au plan focal commun des lentilles 31 et 33. L'ouverture numérique de la première lentille, 31, détermine les paramètres de l'effet de diffraction conique à travers le rayon normalisé conique, définies ci-dessous. Le second objectif, 33, restaure le parallélisme de la lumière, pour l'injecter au microscope. Il comprend en outre un sous-module de contrôle de polarisation, 71, comprenant, par exemple, une fame quart d'onde tournante, une paire de valves de lumière à cristaux liquides ou une cellule de Pockels, 72, et un analyseur 73. L'information des paramètres de Stokes peut être transformée en information séquentielle, à travers une séquence de distributions lumineuses spatialement différenciés, et portant des informations séquentielles, comme décrit ci-dessus.

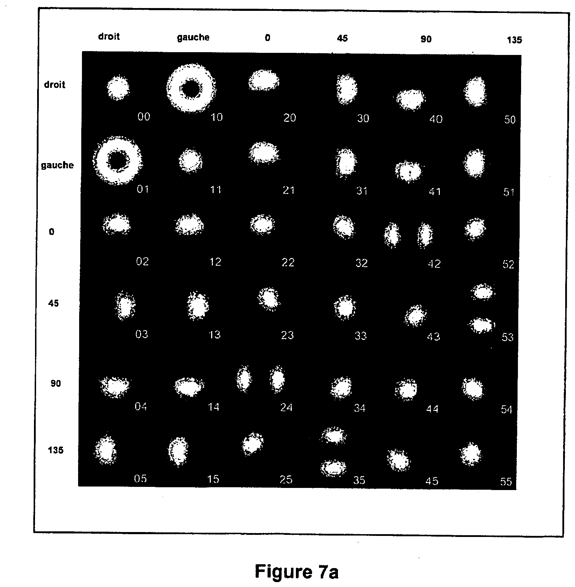

Se référant à la Figure 7a, cette figure représente les distributions lumineuses, créées à travers un cristal conique de paramètre conique normalisé po de 0.388, calculées par une approximation scalaire, pour différents états de polarisation d'entrée et de sortie. Ces distributions lumineuses ont été calculées en utilisant le logiciel Diffract de la société MMresearch. Ces distributions lumineuses ont été calculées dans un plan intermédiaire d'imagerie et non au foyer de l'objectif pour séparer la réfraction conique des effets vectoriels. Les états de polarisation - d'entrée et de sortie - sont caractérisés par leur angle pour les polarisations linéaires et par leurs chiralités pour les polarisations circulaires.

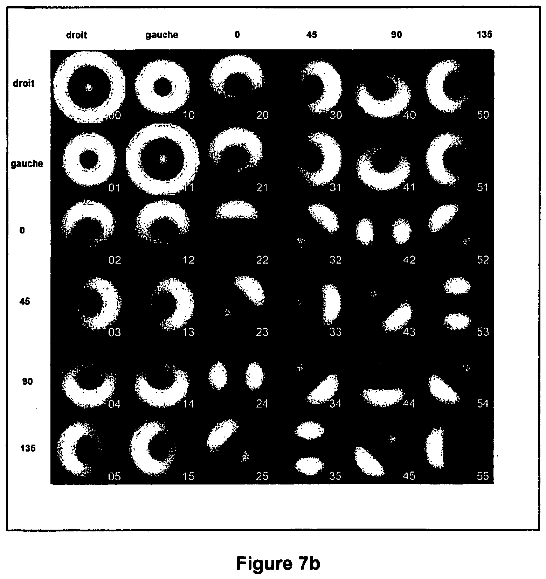

Se référant à la Figure 7b, cette figure représente les distributions lumineuses, créées à travers un cristal conique de paramètre conique normalisé po de 0.818, calculées par une approximation scalaire, pour différents états de polarisation d'entrée et de sortie. Ces distributions lumineuses ont été calculées en utilisant le logiciel Diffract de la société MMresearch. Ces distributions lumineuses ont été calculées dans un plan intermédiaire d'imagerie et non au foyer de l'objectif pour séparer la réfraction conique des effets vectoriels. Les états de polarisation - d'entrée et de sortie - sont caractérisés par leur angle pour les polarisations linéaires et par leurs chiralités pour les polarisations circulaires.

Nous noterons principalement les distributions lumineuses suivantes :

- Le fondamental : Figure 7200 et 7aui, obtenue entre polariseurs circulaires parallèles, qui est une distribution proche de la distribution d'Airy
- Le vortex : Figure 7ao; et 7ajo obtenue entre polariseurs circulaires, croisés
- La distribution que nous avons appelé la distribution en « croissant de lune », les sous-figures 720,2-5, 701,2-5, 7a2-5,0 et 7a2-5,1, sont obtenue entre un polariseur circulaire et un polariseur linéaire d'angle variable ; cette distribution est antisymétrique et l'axe tourne avec l'axe du polariseur linéaire,
- La distribution que nous avons appelé la distribution en « demi-lunes », sous figures 7042, 7a35, 7a24 et 7assont obtenues entre deux polariseurs croisés ; cette distribution est symétrique.
- Les distributions lumineuses plus complexes, Figure 7b, pour un cristal de paramètre conique normalisé, po, supérieur à 0.5
- La réalisation de distributions lumineuses additionnelles à l'aide de deux - ou plus - cristaux coniques en cascade, (non représentées) avec ou sans éléments de polarisation statiques ou dynamiques entre les cristaux

**Redondance et variations de phase aléatoires**

Les distributions lumineuses élémentaires décrites dans la Figure 7 peuvent être obtenues de plusieurs façons différentes. De plus, certaines d'entre elles peuvent être obtenues comme une combinaison linéaire d'autres distributions lumineuses élémentaires ; par exemple le vortex peut être obtenu par la n'importe quelle somme de deux distributions lumineuses « demi-lunes » orthogonales.

Cette redondance permet de moyenner une partie des erreurs de phases aléatoires présentes inexorablement dans de nombreux processus de mesure d'objets biologiques. Ceci renforce la robustesse de la méthodologie de mesure des modes de réalisation de l'invention et son applicabilité.

Des distributions lumineuses nouvelles peuvent être aussi obtenues comme des combinaisons mathématiques de distributions lumineuses élémentaires. La distribution lumineuse « pseudo vortex », calculée à partir de combinaisons arithmétiques des quatre distributions de Stokes a la particularité d'avoir un très fort gradient à l'origine.

La Méthode PSIT a été conçue au départ pour permettre une superrésolution latérale ; toutefois la méthode PSIT peut aussi être utilisée pour obtenir la position longitudinale d'un fluorophore. En effet, certaines distributions lumineuses élémentaires sont relativement insensibles - dans des limites raisonnables - à une variation de la position longitudinale du fluorophore, d'autres y sont au contraire très sensibles. Une séquence de distributions lumineuses compactes, certaines d'entre elles indépendantes et certaines d'entre elles dépendantes de la position longitudinale permettrait de remonter à la position longitudinale des fluorophores.

De plus, pour les distributions lumineuses dépendant fortement de la position longitudinale du fluorophore, une série de distributions lumineuses élémentaires décalées légèrement longitudinalement l'une par rapport à l'autre peut être projetée sur l'échantillon, permettant un ensemble d'images contenant une information longitudinale.

De plus, certaines distributions lumineuses élémentaires plus complexes, consistant en des superpositions plus complexes d'ondes existent avec une forte dépendance longitudinale ; par exemple les « spot tridimensionnels obscurs » décrits par Zhang, [28], créent un spot noir entouré en trois dimensions par une sphère lumineuse. Ces « spot tridimensionnels obscurs » consistent en une superposition de fonctions de Laguerre-Gauss, qui peuvent être réalisés à l'intérieur d'une cavité laser ou à l'aide d'un hologramme ou d'une plaque de phase, comme suggéré par Zhang ou à l'aide de cristaux coniques ou uniaxes comme le suggère l'inventeur.

Toute ces variantes de la méthodologie de mesure sont réputées faire partie de l'invention. L'inventeur a pourtant choisi, dans l'implémentation préférée de séparer en deux modules optiques disjoints mais complémentaires les mesures latérales des mesures longitudinales pour réduire la complexité de chacun des modules complémentaires.

### Effets vectoriels

La théorie développée jusqu'à présent décrit la distribution de lumière dans le plan d'imagerie du microscope, 35. La répartition de la lumière projetée sur l'échantillon est, selon la théorie de l'imagerie géométrique, une image réduite de la distribution de la lumière dans le plan image.

Toutefois, comme il est décrit abondamment dans la littérature, pour un objectif à forte ouverture numérique, la théorie de l'imagerie géométrique n'est pas exacte et les effets vectoriels, doivent être pris en compte. Ces effets consistent essentiellement en la présence d'une composante polarisée longitudinalement.

En référence de nouveau à la Figure 6, pour atténuer les effets vectoriels, il peut être avantageux de maintenir l'analyseur final fixe et d'ajouter un élément supplémentaire, fixe ou variable, le sous module d'adaptation de polarisation de sortie, 74, pour contrôler la polarisation de sortie. Nous avons constaté que la polarisation de sortie ayant une symétrie circulaire réduit sensiblement les effets vectoriels. Une telle polarisation peut être circulaire, radial ou azimutale. Pour la polarisation circulaire, le sous-module d'adaptation de polarisation de sortie 74, est tout simplement une lame de retard d'un quatre d'onde. Dans ce cas, les éléments de polarisation longitudinale ont une symétrie de vortex et se fondent harmonieusement dans le système avec seulement une petite modification de la forme des paramètres de Stokes, même pour les objectifs de microscope avec une ouverture numérique très élevé.

Alternativement, le sous-module d'adaptation de polarisation de sortie, 74, peut être variable et s'adapter à la topologie et à la symétrie de chacune des distributions lumineuses compactes.

### Module de détection

Le corollaire de la puissance de la méthodologie de mesure est l'exigence d'un module de détection plus complexe, capable de détecter et récupérer les informations créées. En microscopie confocale à balayage le détecteur est un détecteur constitué d'un seul élément comme un PMT ou un SPAD. Le temps d'acquisition du détecteur est déterminé par le mécanisme de balayage.

La méthodologie de mesure nécessite, dans certains modes de réalisation, deux modules de détection, au lieu d'un, les modules de détecteur, fondamental et vortex. En outre, la méthodologie de mesure nécessite, dans certains modes de réalisation, pour chaque volume éclairé, l'acquisition de l'information optique sur une petite grille spatiale, typiquement 16* 16, à un taux plus élevé que le temps du pixel, en raison de l'exigence de reconnaître et de quantifier les signaux séquentiels.

Un module de détection amélioré, 65, peut être mis en œuvre en utilisant des détecteurs de petite taille faible nombre de pixels. Un tel module n'aura pas été réalisable il y a dix ou vingt ans, en raison de l'absence de technologies adéquates. Aujourd'hui, les détecteurs de petite taille faible nombre de pixels, à cadence élevée, avec des caractéristiques de faible bruit sont disponibles sur la base de plusieurs technologies des matrices de SPAD avec un faible nombre de pixels, comme 32 * 32 ont été démontré récemment avec des taux d'acquisition jusqu'à 1 MHz. Le module détecteur amélioré, 65, peut égalenient être mis en œuvre à l'aide de CCD, EMCCD ou capteurs CMOS. Des capteurs CCD, CMOS ou EMCCD avec un faible nombre de pixels existeni ou peuvent être conçus spécifiquement. En outre, les détecteurs CCD, CMOS EMCCD peuvent être utilisés en utilisant des fonctionnalités de région d'intérêt, de sous-fenêtrage ou de «binning», disponibles dans de nombreux détecteurs.

Les informations spatio-temporelles référencées ici, sont la position et le temps de l'impact de chaque photon fluorescent. Dans les systèmes réels, l'information spatio-temporelle est corrompue par le bruit du détecteur, ce qui crée des photons erronés, et par l'inefficacité de détection, ce qui crée des photons qui ne sont pas détectés, réduisant les performances. Dans les matrices de SPAD, pour chaque photon, le pixel qui l'a détecté et le teinps d'impact sont reçus, à savoir l'information spatio temporelle complète est disponible. Pour des détecteurs CCD, CMOS ou EMCCD, l'acquisition de plusieurs trames est nécessaire pour approximer l'information spatio-temporelle.

Dans plusieurs implémentations nous ferons référence à des détecteurs séparés; dans de très nombreux cas les détecteurs pourront être soit physiquement séparés soit consistant en des zones différentes sur un même détecteur, soit une combinaison des deux cas précédents.

## Algorithmique SRCDA

Comme exposé antérieurement, l'algorithmique SRCDA peut être implémentée en utilisant les méthodes problème inverse ou d'estimation de paramètres connues de l'Homme du Métier.

Nous présentons aussi une algorithmique selon un mode de réalisation, spécifique à la méthodologie de mesure, basée sur un ensemble de descripteurs.

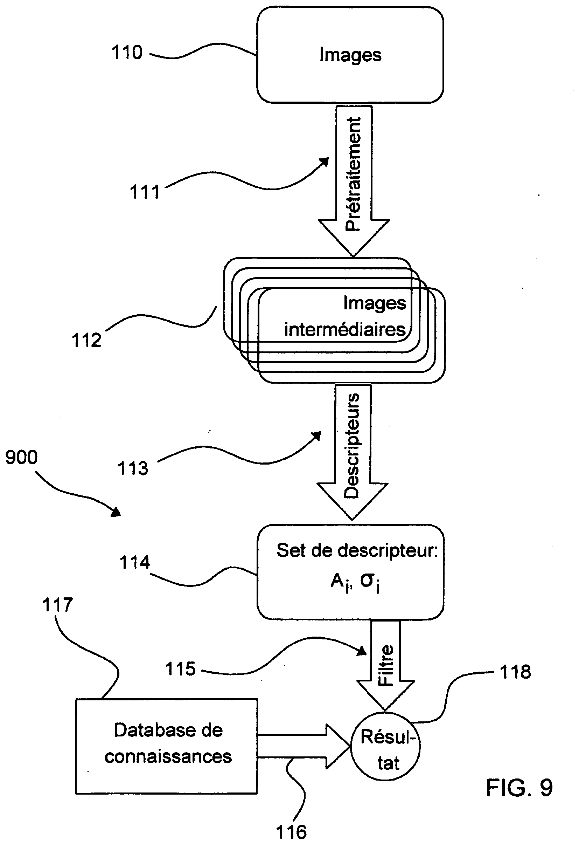

On se réfère maintenant à la figure 8, qui est une illustration schématique simplifiée 900 d'une méthode d'algorithme de superrésolution de données de fluorophore, conformément à un mode de réalisation de la présente invention, Une procédure d'algorithme, présenté dans la figure. 9, quantifie le nombre de fluorophores, récupère les attributs de chaque fluorophore et quantifie la précision de chaque paramètre de sortie.

La procédure de prétraitement, 111, réorganise l'information spatio-temporelle, 110, dans des ensembles d'images de superrésolution, 112. Cette opération peut être effectuée en utilisant une procédure banque de filtres. L'ensemble de données intermédiaire est alors une petite série de petites images, typiquement de 16 * 16 pixels. La procédure de prétraitement, s'applique sur un petit nombre d'éléments spatio-temporelles de l'ordre de quelques milliers, il peut être effectuée en temps réel et utilisant du matériel informatique existant.

La procédure de descripteur, 113, l'étape principale du calcul, crée à partir de chaque image, un ensemble de descripteurs, 114, et leur pertinence statistique. Les descripteurs comprennent, mais ne sont pas limités à : l'intensité de chaque image, la présence, à l'image d'une répartition de la lumière et sa caractérisation comme une distribution régulière ou un vortex, son centre de gravité et ses moments d'ordre un et plus.

La troisième étape est une opération de filtrage, 115, dans lequel seuls les descripteurs, qui sont statistiquement pertinents, sont conservés.

L'opération de classification, 116, est la dernière étape de l'algorithme. L'algorithme est capable de reconnaître, sur la base de l'ensemble des descripteurs, 114, et une base de connaissances, 117, les différents cas de mesure comme un fluorophore unique, deux fluorophores séparés longitudinalement ou latéralement et trois ou plusieurs fluorophores.

Il convient de noter que, en raison de la quantité d'informations créées, de nombreux cas qui ont été ambiguë en microscopie à fluorescence seront clairement déterminés. Par exemple, comme décrit plus en détails ultérieurement, un fluorophore unique doit remplir à une longue liste de conditions et ne peut être confondu avec un cas multi-fluorophore. Deux fluorophores séparés longitudinalement vont créer des ensembles indépendants de descripteurs et deux fluorophores séparés latéralement ditfèrent de façon claire sur au moins un descripteur d'un fluorophore unique.

## Algorithme du processus optique composé implémentant la méthodologie de mesure

Le processus optique composé selon au moins un mode de réalisation de l'invention est un complément logique de l'algorithme des descripteurs. En effet, le résultat de la procédure de calcul des descripteurs peut mener à la conclusion qu'une image supplémentaire permettrait d'améliorer les performances de la mesure. La plateforme de microscopie SRCDP permet l'acquisition d'une - ou plusieurs images complémentaires choisie dans un ensemble de distributions lumineuses des méthodes PSIT ou PDOS.

Un exemple est explicité ultérieurement.

*Mesure de position d'un point par la méthode PSIT*

La méthode PSIT peut être utilisée comme une technique permettant de mesurer la position d'un fluorophore avec une haute précision. Cette mesure peut utiliser l'algorithme des descripteurs présenté antérieurement.

Considérons un fluorophore positionné à la position x, y en coordonnées cartésiennes et $\rho$, $\theta$ en coordonnés polaires. Une séquence d'illumination consistant en une onde fondamentale, et un couple de distributions dites « demi-lunes », alignées suivant des axes orthogonaux est projetée sur le fluorophore.

La procédure de prétraitement créée deux images :

Une image « top hat » consistant en la somme des trois images de la séquence,

Une image vortex consistant en la somme des deux images demi-lunes.

Un premier descripteur est la position cartésienne calculée à l'aide de l'algorithme du centroïde sur l'image « top-hat ».

En se référant à la Figure 9, la position radiale p peut être mesurée univoquement en mesurant un paramètre, $\rho_a$, égal à l'arc tangente normalisé d'un facteur $\pi$, du rapport d'intensité entre l'intensité normalisée émise par le fluorophore illuminé par l'onde vortex, Iv, et l'intensité normalisée émise par le fluorophore illuminé par l'onde fondamentale, If. En effet :

- L'intensité normalisée émise par le fluorophore illuminé par l'onde fondamentale varie de 1 au centre pour l'onde fondamentale à 0 au rayon d'Airy,
- L'intensité normalisée émise par le fluorophore illuminé par l'onde vortex varie de 0 au centre pour à 1 au maximum du vortex pour arriver à 0 pour une valeur légèrement supérieure au rayon d'Airy. L'arc tangente du rapport est une fonction monotone.

La position azimutale peut être mesurée en mesurant le rapport d'intensité entre l'intensité totale émise par le fluorophore illuminé par la première distribution demi-lune, IH, et l'intensité totale émise par le fluorophore illuminé par la seconde distribution demi-lune, Ive. Le rapport entre ces deux intensités est une loi géométrique en tangente carrée :

$$\frac{I_{VE}}{I_H} = \tan^2 \theta \qquad\qquad (EQ.\ 9)$$

Les deux mesures sont redondantes. Cette redondance est une mesure permettant de qualifier l'objet observé comme étant un point unique et de séparer ce cas des autres objets potentiellement présents sur l'échantillon.

*Représentation dans un espace de dimension supérieur : représentation Cartesiano Polaire*

Ce résultat peut être généralisé. Nous introduisons dans ce document un ensemble de nouvelles représentations du plan, couplant la représentation cartésienne et la représentation polaire. Nous avons nommé cette représentation la représentation Cartesiano-Polaire. Un point dans le plan sera représenté par un quadruplet, x, y, $\rho$, $\theta$. Cette représentation est non-euclidienne et redondante. Une représentation similaire de l'espace peut être définie mutatis mutandis.

A première vue cette représentation semble inutile ; c'est une représentation très complexe d'une réalité beaucoup plus simple. Il est fort connu que la position d'un point dans un plan peut être représentée alternativement, soit en utilisant les coordonnées cartésiennes, x et y, soit en utilisant les coordonnées polaires, $\rho$ et, $\theta$.

*Représentation dans un espace de dimension supérieur : Espace de Pythagore*

Nous ne détaillerons dans ce document que la version simplifiée de la Représentation Cartesiano-Polaire, dans laquelle nous représentons un point par les coordonnées x, y et $\rho$. Nous avons nommé cet espace l'Espace de Pythagore.

Définissons la surface géométrique comme étant une surface bidimensionnelle dans l'espace tridimensionnel, qui remplit l'équation géométrique constitutive $\rho^2 = x^2 + y^2$, assumons un système de mesure mesurant simultanément x, y et $\rho$, tel qu'un système de mesure décrit dans le paragraphe précédent conjointement avec un algorithme de centroïde sur les mêmes données. Un point physique sera donc positionné, dans l'espace de Pythagore, sur la surface géométrique. Considérons le cas de deux ou plusieurs points physiques : Le centre de gravité de la mesure des deux points est en dehors de la surface géométrique et crée un point en dehors de cette surface. Cette représentation. Mathématique est une formalisation et une généralisation de l'algorithme déterministe permettant la séparation du cas d'un point isolé de celui d'un agrégat de points décrit antérieurement.

*Reconnaissance et mesure de deux points : un nouveau critère de résolution*

Considérons maintenant deux fluorophores positionnés symétriquement autour du centre aux positions ρ, θ et ρ, -θ en coordonnés polaires. Nous utiliserons le système décrit dans les paragraphes précédents. Les trois descripteurs donneront les résultats suivants :

- Le centroïde mesurera le centre de gravité de la distribution lumineuse, qui sera à l'origine,
- Le descripteur ρ, mesurera la valeur radiale commune des deux fluorophores,
- Le descripteur, θ, qui dans le cas des demi-lunes contient une dégénérescence entre θ e t- θ, mesurera la valeur, θ.

Comme cité précédemment si la valeur du descripteur ρ n'est pas nulle nous savons que le cas étudié n'est pas un point mais deux ou plus. De plus, les descripteurs ρ et θ nous permettent de mesurer les caractéristiques de deux points à une résolution très supérieure à celle définie par le critère de Rayleigh. Qui plus est, en utilisant un processus composé, il est possible de séparer ce cas de la grande majorité des cas de 3 points et plus. Une distribution lumineuse supplémentaire peut être projetée sur l'échantillon, une demi-lune inclinée d'un angle θ ; l'hypothèse de la présence de deux points sera confortée ou infirmée en fonction des résultats de cette image. En effet, l'énergie mesurée ne sera nulle que pour deux points, pour une ligne ou pour une série de points alignés dans la direction de l'angle θ.

**Module de contrôle**

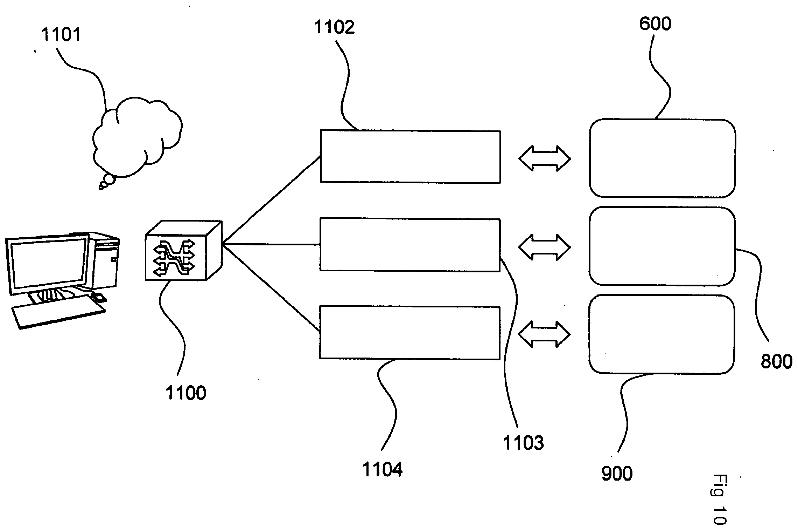

En référence à la Figure 10, dans le mode préféré de cette invention, l'invention décrit de plus, les différents éléments de contrôle intégrés dans la plateforme SRCDP, 500:
Le Module de contrôle, 1100, à l'aide de la procédure systémique de contrôle, 1101, contrôle et modifie les paramètres optiques de la plateforme SRCDP, 500, les paramètres électroniques de l'ensemble de de détection amélioré, 65, et les paramètres mathématiques des procédures algorithmiques SRCDA, 600, pour optimiser l'information émergente, suivant des critères définis par le système ou par l'utilisateur. Le contrôle est réalisé en faisant varier les systèmes de contrôle 1102, 1103 et 1104, des différents éléments de la plateforme, 600, 800 et 900. Le système de contrôle, 1100, utilisera aussi, si elles sont disponibles des informations externes, 1105, relayées par le support informatique.

Dans un mode de réalisation de la méthode PSIT, les ondes régulière et singulière sont créées par la propagation d'une onde incidente régulière à travers un cristal uniaxe, en remplacement du cristal conique, 32.

Dans un autre mode de réalisation de la méthode PSIT, les ondes régulières singulière sont créées par le positionnement au niveau du plan de Fourier d'un système optique d'une lame de phase - telle qu'une lame de phase spirale - ou un réseau de pas inférieur à la longueur d'onde, ou par le positionnement à un plan adéquat d'un hologramme.

Dans un autre mode de réalisation de la méthode PSIT - point épais- non représentée, l'illumination de l'échantillon se compose d'une séquence d'au moins deux distributions lumineuses compactes composées, chaque distribution lumineuse compactes composées étant elle-même constituée d'au moins deux distributions lumineuses compactes simples, projetées simultanément. Lesdits au moins deux distributions lumineuses compactes simples étant cohérents optiquement, cohérents partiellement ou incohérents l'un par rapport à l'autre, lesdits au moins deux distributions lumineuses compactes simples devant être positionnée à des positions spatiales différentes et lesdits au moins deux distributions lumineuses compactes simples différant dans au moins un des caractéristiques, telle que leur position centrale latérale, leur position centrale longitudinale, leur polarisation, leur amplitude ou leur phase. L'ensemble de distributions lumineuses compactes simples contenant des distributions lumineuses compactes de familles topologiques différentes.

Dans un autre mode de réalisation de la méthode PSIT, les distributions lumineuses compactes sont créées par différents modes d'un laser multimode, non représenté et la séquence de distributions lumineuses compactes est créée en créant successivement les différents modes ou, à défaut, en contrôlant l'équilibre de l'énergie entre les modes.

Dans un autre mode de réalisation de la méthode PSIT, le rapport entre les ondes régulières et singulières est modifié dynamiquement, non représenté.

Dans un autre mode de réalisation de la méthode PSIT, non représenté, l'onde régulières et l'onde singulière sont créées par une séparation physique du faisceau incident - au moins - deux voies, la modification du faisceau dans l'une des voies, de régulière à singulière, étant réalisée par des moyens connus comme des lames de phase ou en spirale, élément optique holographique, réseau de pas inférieur à la longueur d'onde, cristaux biaxes ou uniaxes ou combinaison des deux, et la recombinaison des deux faisceaux en utilisant un combineur de faisceaux, en un seul faisceau. Dans ce mode de réalisation, la différenciation des distributions lumineuses compactes peut être effectuée soit sur le faisceau combiné ou sur chacun des faisceaux, de manière indépendante, après la séparation et avant la recombinaison.

Dans un autre mode de réalisation de la méthode PSIT, suivi dynamique, non représenté, le système comporte des moyens, y compris mais non limité à miroirs contrôlables, dispositifs électro optiques ou acousto-optiques, ou des actionneurs piézo-électriques, capable de déplacer la distribution lumineuse compacte ou la séquence de distributions lumineuses compactes dans l'espace avec une grande précision. Dans le système de suivi dynamique de la position de la distribution lumineuse compacte et leur séquence est contrôlée dynamiquement de façon à suivre au moins une cible spécifique.

Dans un autre mode de réalisation de la méthode PSIT, fluorophore noir, non représenté, la distribution lumineuse compacte ou la combinaison mathématique de distributions lumineuses compactes est configuré de telle sorte qu'un zéro d'intensité existe au centre de la distribution lumineuse compacte. Le système comprend des moyens aptes à déplacer dans l'espace la distribution lumineuse compacte et ces moyens sont utilisés pour suivre le fluorophore, pour positionner le fluorophore en son centre, en fonction du temps. Lorsque le fluorophore est positionné au centre de la distribution lumineuse compacte, sans mouvement, sa position peut être évaluée avec une grande précision sans lumière fluorescente qui émerge d'un fluorophore réduisant ainsi sensiblement les effets de photo-blanchiment. Un mouvement du fluorophore peut être compensé par un mouvement adéquat de la position de la distribution lumineuse compacte, permettant de suivre le fluorophore en utilisant une petite quantité de lumière fluorescente émise.

Dans un autre mode de réalisation de la méthode PSIT, choix des séquences dynamiques, non représenté, le système détermine de façon dynamique, sur la base d'une hypothèse de positionnement ou sur un premier ensemble de mesures, la séquence optimale des distributions lumineuses compactes.

Dans un autre mode de réalisation de la méthode PSIT, choix des séquences et positionnement dynamiques de la distribution lumineuse compacte, non représenté, le système comporte des moyens y compris mais non limité à des miroirs contrôlables, dispositifs électro-optiques et acousto-optiques ou des actionneurs piézo-électriques, capable de déplacer dans l'espace le distribution lumineuse compacte ou la combinaison de distributions lumineuses compactes avec une grande précision. Le système détermine de façon dynamique, sur la base d'une hypothèse de positionnement ou sur un premier ensemble de mesures, la séquence optimale et la position des distributions lumineuses compactes.

Dans un autre mode de réalisation de la méthode PSIT, la méthode PSIT de triangulation, deux, ou plus, processus de mesure de la méthode PSIT, décrit antérieurement, sont réalisés sur le même échantillon avec des axes de projection différents. La variation de position latérale entre les deux mesures permet la mesure de la position longitudinale des nanoémetteur lumineux.

Dans un autre mode de réalisation de la méthode PSIT, la méthode PSIT parallèle, la lumière est incidente sur un ensemble de microlentilles - ou un autre moyen optique, connu de l'Homme de l'Art, permettant la réalisation d'un ensemble de distributions lumineuses en parallèle; ces distributions lumineuses sont modifiées par un module optique pour réaliser, simultanément, sur un grand nombre de points discrets, la méthode PSIT,

Dans un autre mode de réalisation de la méthode PSIT, la méthode PSIT multispectrale (non représentée), l'échantillon est illuminé, séquentiellement ou simultanément, par au moins deux séquences d'illumination, chaque séquence projetant de la lumière sur l'échantillon à des longueurs d'ondes différentes 10

Quant à une discussion plus approfondie de la manière de l'utilisation et l'exploitation de l'invention, elle devrait ressortir de la description ci-dessus. Par conséquent, aucune discussion relative à la forme de l'utilisation et du fonctionnement ne sera décrite.

À cet égard, il est entendu que l'invention n'est pas limitée dans son application aux détails de la construction et au régime des composantes énoncées dans la description précédente ou illustrées dans les dessins. L'invention est capable d'autres modes de réalisation et peut être pratiquée et effectuée de diverses manières. En outre, il est entendu que la phraséologie et la terminologie employée dans ce document sont dans le but de la description et ne devrait pas être considérée comme limitative.

Les références citées ici enseignent de nombreux principes qui sont applicables à la présente invention. Par conséquent, la totalité du contenu de ces publications sont incorporés ici par référence, le cas échéant pour les enseignements de détails supplémentaires ou de remplacement, les caractéristiques et / ou d'information technique.

Les modes de réalisation de l'invention décrits peuvent être intégrés sur un microscope confocal de fluorescence. Le système de superrésolution selon des modes de réalisation de l'invention consiste en une nouvelle modalité de mesure, en complément ou en remplacement des modalités existantes de la microscopie. Toutefois, le système de superrésolution selon des modes de réalisation de

L'invention peut tout aussi bien être intégré sur les autres plateformes de microscopie. Ces plateformes de microscopie, décrites par exemple en comprennent mais ne sont pas limité aux : microscopes à champ large, « Bright field microscope », microscopes à champ obscur, « dark field microscope », les microscopes de polarisation, les microscopes à différence de phase, les microscopes à interférence différentiel de contraste, les microscopes stéréoscopiques, les microscopes Raman, les microscopes dédiés à une tache spécifique, comme le « live cell imaging », le « cell sorting », « cell motility » ou tout autre instrument de microscopie optique, tels que décrits par exemple dans la référence [4]..

Il est entendu que l'invention n'est pas limitée dans son application aux détails énoncés dans la description contenue dans les présentes ou illustrés dans les dessins. L'invention est capable d'autres modes de réalisation et d'être pratiquée et effectuée de diverses manières. L'homme de l'art comprendra aisément que diverses modifications et changements peuvent être appliquées aux modes de réalisation de l'invention tel que décrit précédemment sans sortir de son champ d'application, définie dans et par les revendications annexées.

## REFERENCES

1. R. Henriques and M. M. Mhlanga, "PALM and STORM: What hides beyond the Rayleigh limit?," Biotechnology journal 4, 846-857 (2009).

2. K. R. Chi, "Super-resolution microscopy: breaking the limits," Nature Methods 6, 15-18 (2008).

3. Z. Co, "Zeiss, "Zeiss Microscopy and image analysis" (2011), retrieved http://www.zeiss.com/4125681 C00466C26/?Open

4. N. Co., "MicroscopyU: the source for Microscopy éducation" (2011), retrieved http://www.microscopyu.com/.

5. Lindegren, "Photoelectric astrometry - A comparison of methods for precise image location," in Modem astrometry; Proceedings of the Colloquium, Vienna, Austria, September 11-14, 1978. , 1978), 197-217.

6. J. F. Nye and M. V. Berry, "Dislocations in Wave Trains," Proceedings of the Royal Society of London. Series A, Mathematical and Physical Sciences (1934-1990) 336, 165-190 (1974),

7. S. W. Hell and J. Wichmann, "Breaking the diffraction resolution limit by stimulated émission: stimulated-emission-depletion fluorescence microscopy," Optics letters 19, 780-782 (1994).

8. M. J. Rust, M. Bates, and X. Zhuang, "Sub-diffraction-limit imaging by stochastic optical reconstruction microscopy (STORM)," Nat Meth 3, 793-796 (2006).

9. E. Betzig, G. H. Patterson, R. Sougrat, O. W. Lindwasser, S. Olenych, J.S. Bonifacino, M. W. Davidson, J. Lippincott-Schwartz, and H. F. Hess, "Imaging intracellular fluorescent proteins at nanomcter resolution," Science 313, 1642 (2006).

10. W. Denk, J. P. Strickler, and W. W. Webb, "Two-photon laser microscopy," (Google Patents, 1991).

11. A. Korzybski and D. Kohn, Une carte n'est pas le territoire: prolegomenes aux systèmes non aristotéliciens et à la sémantique générale (éditions de l'éclat, 1998).

12. W. R. Hamilton, "Third Supplement to an Essay on the Theory of Systems of Rays," Trans. Royal Irish. Acad., pp 1-144 (1833).

13. H. Llyold. "On the Phenomena presented by Light in its Passage along the Axes of Biaxial Crystals," The London and Edinburgh Philosophical Magazine and Journal of Science ii, 112-120 (1833).

14. H. Llyold, "Further Experiments on the Phenomena presented by Light in its Passage along the Axes of Biaxal Crystals.," The London and Edinburgh Philosophical Magazine and Journal of Science ii, 207-210 (1833).

15. M. V. Berry, "Conical diffraction asymptotics: fine structure of Poggendorff rings and axial spike," Journal Of Optics A-Pure And Applied Optics 6, 289-300 (2004).

16. M. Berry and M. Jeffrey, "Conical diffraction complexified: dichroism and the transition to double refraction," Journal Of Optics A-Pure And Applied Optics 8, 1043 (2006).

17. M. Berry and M. Jeffrey, "Chiral conical diffraction," Journal Of Optics A-Pure And Applied Optics 8, 363 (2006).

18. C. Phelan, D. O'Dwyer, Y. Rakovich, J. Donegan, and J. Lunney, "Conical diffraction and Bessel beam formation with a high optical quality biaxial crystal," J. Opt. A, Pure Appl. Opt 7, 685 690 (2009).

19. M. Berry and M. Jeffrey, "Conical diffraction: Hamilton's diabolical point at the heart of crystal optics," Progress in Optics 50, 13 (2007).

20. A. Geivandov, I. Kasianova, E. Kharatiyan, A. Lazarev, P. Lazarev, and S. Palto, "Printable Thin Biréfringent Film Retarders for LCD.

21. B. Acharya, A. Primak, T. Dingemans, E. Samulski, and S. Kumar, "The elusive thermotropic biaxial nematic phase in rigid bent-core molecules," Pramana 61, 231-237(2003).

22. T. Maldonado, "Electro-optic modulators," in Handbook of Optics, M. Bass, ed. (McGraw Hill, Orlando, 1995).

23. J. Kemp, "Piezo-optical birefringence modulators: new use for a long-known effect," Journal of the Optical Society of America 59, 950-953 (1969).

24. M. Minsky, "Microscopy apparatus," (Google Patents, 1961).

25. D. H. Goldstein and E. Collett, Polarized light (CRC, 2003), Vol. 83.

26. J. B. Pawley, Handbook of biological confocal microscopy (Springer Verlag, 2006).

27. M. Bass, Handbook of optics (McGraw-Hill, 2001).

28. Y. Zhang, "Génération of three-dimensional dark spots with a perfect light shell with a radially polarized Laguerre Gaussian beam," Applied optics 49,6217-6223 (2010).

**Revendications**

1. Un procédé optique de mesure pour déterminer la position spatiale d'au moins un nanoémetteur lumineux d'un échantillon, le procédé comportant :

   - la projection d'une distribution lumineuse compacte ou d'une combinaison de distributions lumineuses compactes telles qu'un zéro d'intensité existe au centre de la distribution lumineuse compacte ou au centre de la combinaison de distributions compactes ;
   - le déplacement d'une distribution lumineuse compacte ou d'une combinaison de distributions lumineuses compactes, pour suivre le nanoémetteur lumineux et pour positionner le nanoémetteur au centre de la distribution lumineuse compacte ou au centre de la combinaison de distributions compactes en fonction du temps ;
   - l'évaluation de la position du nanoémetteur lumineux, lorsqu'il est au centre de la distribution compacte ou au centre de la combinaison de distributions lumineuses compactes, sans lumière fluorescente.

2. Un procédé optique de mesure selon la revendication 1, dans lequel un mouvement du nanoémetteur lumineux est compensé par un mouvement adéquat de la position de la distribution lumineuse, pour suivre le nanoémetteur lumineux en utilisant une partie de la lumière fluorescente émise.

3. Un procédé optique de mesure selon la revendication 1 et 2, comportant en outre la détermination de façon dynamique, sur la base d'une hypothèse de positionnement dudit au moins un nanoémetteur, ou sur la base d'un premier ensemble de mesures, de la séquence optimale des distributions compactes.

4. Un procédé selon l'une quelconque des revendications précédentes dans lequel la combinaison de distributions compactes inclut un vortex.

5. Un procédé selon la revendication 4 dans lequel le vortex est généré par une diffraction conique.

6. Un procédé selon l'une quelconque des revendications précédentes comportant l'analyse de la lumière détectée pour obtenir une information de la position longitudinale dudit au moins un nano émetteur.

**7.** Un dispositif optique de mesure pour déterminer la position spatiale d'au moins un nanoémetteur lumineux d'un échantillon, le dispositif comportant :

- des moyens de projection aptes à projeter une distribution lumineuse compacte ou une combinaison de distributions lumineuses compactes telles qu'un zéro d'intensité existe au centre de la distribution lumineuse compacte ou au centre de la combinaison de distributions compactes;
- des moyens de déplacement aptes à déplacer dans de l'espace la distribution lumineuse compacte, pour suivre le nanoémetteur lumineux et pour positionner le nanoémetteur au centre de la distribution lumineuse compacte ou au centre de la combinaison de distributions compactes en fonction du temps,
- des moyens d'analyse aptes à évaluer de la position du nanoémetteur lumineux, lorsqu'il est au centre de la distribution compacte ou au centre de la combinaison de distributions compactes, sans lumière fluorescente.

**8.** Un dispositif optique de mesure selon la revendication 7, dans lequel les moyens de déplacement sont aptes à compenser un mouvement du nanoémetteur lumineux par un mouvement adéquat de la position de la distribution lumineuse, pour suivre le nanoémetteur lumineux, en utilisant une partie de la lumière fluorescente émise.

**9.** Un dispositif optique de mesure selon la revendication 7 ou 8, comportant des moyens pour déterminer de façon dynamique, sur la base d'une hypothèse de positionnement dudit au moins un nanoémetteur, ou sur la base d'un premier ensemble de mesures la séquence optimale des distributions compactes.

**10.** Un dispositif optique de mesure selon l'une quelconque des revendications 7 à 9, dans lequel les moyens de déplacement comprennent des miroirs contrôlables, dispositifs electro-optiques ou acousto-optiques, ou des actionneurs piezo-électriques capables de déplacer la position de la distribution compacte ou de la combinaison de distributions compactes.

**11.** Un dispositif optique de mesure selon l'une quelconque des revendications 7 à 10 dans lequel la combinaison de distributions compactes de lumière inclut un vortex.

**12.** Un dispositif selon la revendication 11 dans lequel le vortex est généré par une diffraction conique.

**13.** Un dispositif selon l'une quelconque des revendications 7 à 12 comportant des moyens d'analyse de la lumière détectée pour obtenir une information de la position longitudinale dudit au moins un nano émetteur.


**Patentansprüche**

**1.** Optisches Messverfahren zur Bestimmung der räumlichen Position von mindestens einem leuchtenden Nanoemitter einer Probe, wobei das Verfahren umfasst:

die Projektion einer kompakten Lichtverteilung oder einer Kombination von kompakten Lichtverteilungen derart, dass im Zentrum der kompakten Lichtverteilung oder im Zentrum der Kombination von kompakten Verteilungen eine Intensitätsnullstelle existiert;
Verschieben einer kompakten Lichtverteilung oder einer Kombination von kompakten Lichtverteilungen, um dem leuchtenden Nanoemitter zu folgen und den Nanoemitter im Zentrum der kompakten Lichtverteilung oder im Zentrum der Kombination von kompakten Verteilungen als eine Funktion der Zeit zu positionieren;
Bewerten der Position des leuchtenden Nanoemitters, wenn er sich im Zentrum der kompakten Lichtverteilung oder im Zentrum der Kombination von kompakten Lichtverteilungen befindet, ohne fluoreszierendes Licht.

**2.** Optisches Messverfahren nach Anspruch 1, wobei eine Bewegung des leuchtenden Nanoemitters durch eine geeignete Bewegung der Position der Lichtverteilung kompensiert wird, um dem leuchtenden Nanoemitter unter Verwendung eines Teils des emittierten fluoreszierenden Lichts zu folgen.

**3.** Optisches Messverfahren nach Anspruch 1 und 2, das außerdem die dynamische Bestimmung der optimalen Abfolge von kompakten Verteilungen auf der Grundlage einer Annahme über die Positionierung des mindestens einen Nanoemitters oder auf der Grundlage eines ersten Satzes von Messungen umfasst.

**4.** Verfahren nach einem der vorstehenden Ansprüche, wobei die Kombination kompakter Verteilungen einen Wirbel einschließt.

**5.** Verfahren nach Anspruch 4, wobei der Wirbel durch eine konische Beugung erzeugt wird.

**6.** Verfahren nach einem der vorstehenden Ansprüche, das die Analyse des erfassten Lichts umfasst, um eine Information über die Längsposition des mindestens einen Nanoemitters zu erhalten.

**7.** Optische Messvorrichtung zur Bestimmung der räumlichen Position von mindestens einem leuchtenden Nanoemitter einer Probe, wobei die Vorrichtung umfasst:

- Projektionsmittel, die dazu ausgelegt sind, eine kompakte Lichtverteilung oder eine Kombination von kompakten Lichtverteilungen derart zu projizieren, dass im Zentrum der kompakten Lichtverteilung oder im Zentrum der Kombination von kompakten Verteilungen eine Intensitätsnullstelle existiert; Verschiebemittel, die dazu ausgelegt sind, die kompakte Lichtverteilung im Raum zu verschieben, um dem leuchtenden Nanoemitter zu folgen und den Nanoemitter im Zentrum der kompakten Lichtverteilung oder im Zentrum der Kombination von kompakten Verteilungen als eine Funktion der Zeit zu positionieren, Analysemittel, die dazu ausgelegt sind, die Position des leuchtenden Nanoemitters, wenn er sich im Zentrum der kompakten Lichtverteilung oder im Zentrum der Kombination von kompakten Lichtverteilungen befindet, ohne fluoreszierendes Licht zu bewerten.

**8.** Optische Messvorrichtung nach Anspruch 7, wobei die Verschiebemittel dazu ausgelegt sind, eine Bewegung des leuchtenden Nanoemitters durch eine geeignete Bewegung der Position der Lichtverteilung zu kompensieren, um dem leuchtenden Nanoemitter zu folgen, unter Verwendung eines Teils des emittierten fluoreszierenden Lichts.

**9.** Optische Messvorrichtung nach Anspruch 7 oder 8, ferner mit Mitteln zum dynamischen Bestimmen der optimalen Abfolge der kompakten Verteilungen auf der Grundlage einer Annahme über die Positionierung des mindestens einen Nanoemitters oder auf der Grundlage eines ersten Satzes von Messungen.

**10.** Optische Messvorrichtung nach einem der Ansprüche 7 bis 9, wobei die Verschiebemittel steuerbare Spiegel, elektrooptische oder akustooptische Vorrichtungen oder piezoelektrische Aktuatoren umfassen, die in der Lage sind, die Position der kompakten Verteilung oder der Kombination von kompakten Verteilungen zu verschieben.

**11.** Optische Messvorrichtung nach einem der Ansprüche 7 bis 10, wobei die Kombination kompakter Lichtverteilungen einen Wirbel einschließt.

**12.** Vorrichtung nach Anspruch 11, wobei der Wirbel durch eine konische Beugung erzeugt wird.

**13.** Vorrichtung nach einem der Ansprüche 7 bis 12 mit Mitteln zur Analyse des erfassten Lichts, um eine Information über die Längsposition des mindestens einen Nanoemitters zu erhalten.

**Claims**

**1.** An optical measurement method for determining the spatial position of at least one light nanoemitter of a sample, the method comprising:

projecting a compact light distribution or a combination of compact light distributions such that an intensity zero exists at the centre of the compact light distribution or the centre of the combination of compact distributions; moving a compact light distribution or a combination of compact light distributions, to track the light nanoemitter and to position the nanoemitter at the centre of the compact light distribution or the centre of the combination of compact distributions as a function of time;
The evaluation of the position of the light emitter, when it is at the centre of the compact light distribution or at the centre of the combination of compact light distributions, without fluorescent light.

**2.** An optical measurement method according to claim 1, wherein a movement of the light nanoemitter is compensated by an adequate movement of the position of the light distribution, to track the light nanoemitter using part of the emitted fluorescent light.

**3.** An optical measurement method according to claim 1 and 2, further comprising dynamically determining, based on a positioning assumption of the at least one nanoemitter, or based on a first set of measurements, the optimal sequence of compact distributions.

**4.** A method according to any of the preceding claims wherein the combination of compact distributions includes a vortex.

**5.** A method according to claim 4 wherein the vortex is generated by conical diffraction.

**6.** A method according to any of the preceding claims comprising analysing the detected light to obtain information of the longitudinal position of the at least one nanoemitter.

**7.** An optical measuring device for determining the spatial position of at least one light nanoemitter of a sample, the device comprising:

- projection means adapted to project a compact light distribution or a combination of compact light distributions such that an intensity zero exists at the centre of the compact light distribution or at the centre of the combination of compact distributions; moving means adapted to spatially move the compact light distribution, to track the light nanoemitter and to position the nanoemitter at the centre of the compact light distribution or the centre of the combination of compact distributions as a function of time analysis means adapted to evaluate the position of the light nanoemitter, when it is at the centre of the compact light distribution or at the centre of the combination of compact distributions, without fluorescent light.

**8.** An optical measuring device according to claim 7, wherein the moving means are adapted to compensate for a movement of the light nanoemitter by a suitable movement of the position of the light distribution, to track the light nanoemitter, using part of the emitted fluorescent light.

**9.** An optical measuring device according to claim 7 or 8, comprising means for dynamically determining, based on an assumption of the positioning of said at least one nanoemitter, or based on a first set of measurements the optimal sequence of compact distributions.

**10.** An optical measuring device according to any one of claims 7 to 9, wherein the moving means comprise controllable mirrors, electro-optical or acousto-optical devices, or piezoelectric actuators capable of moving the position of the compact distribution or the combination of compact distributions.

**11.** An optical measuring device according to any one of claims 7 to 10 wherein the combination of compact distributions of light includes a vortex.

**12.** A device according to claim 11 wherein the vortex is generated by conical diffraction.

**13.** A device according to any one of claims 7 to 12 comprising means for analysing the detected light to obtain information of the longitudinal position of the at least one nanoemitter.

FIG. 1

FIG. 2

FIG. 3

FIG. 4a

50

58

56

55

60

53

42

57

54

59

**FIG. 4b**

60

61

62

"I"

"a$_K$"

**FIG. 4c**

FIG. 4d

FIG. 5

FIG. 6

Figure 7a

Figure 7b

FIG. 8

FIG. 9

Fig 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002141052 A1

**Littérature non-brevet citée dans la description**

- **RICARDO HENRIQUES ; M. MUSA MHLANGA.** *PALM and STORM : What hides beyond the Rayleigh limit?*
- **KELLY RAE CHI.** *Super resolution microscopy: breaking the limits*
- **J.F NYE ; M. BERRY.** *Optique,* 1974
- **D. GOLDSTEIN.** Polarized light
- **R. HENRIQUES ; M. M. MHLANGA.** PALM and STORM: What hides beyond the Rayleigh limit?. *Biotechnology journal,* 2009, vol. 4, 846-857
- **K. R. CHI.** Super-resolution microscopy: breaking the limits. *Nature Methods,* 2008, vol. 6, 15-18
- **Z. CO.** Zeiss Microscopy and image analysis. *Zeiss,* 2011, http://www.zeiss.com/4125681 C00466C26/?Open
- **N. CO.** *MicroscopyU: the source for Microscopy éducation,* 2011, http://www.microscopyu.com
- **LINDEGREN.** Photoelectric astrometry - A comparison of methods for precise image location. *Modem astrometry; Proceedings of the Colloquium, Vienna, Austria,* 11 Septembre 1978, 197-217
- **J. F. NYE ; M. V. BERRY.** Dislocations in Wave Trains. *Proceedings of the Royal Society of London. Series A, Mathematical and Physical Sciences,* 1934, vol. 336, 165-190
- **S. W. HELL ; J. WICHMANN.** Breaking the diffraction resolution limit by stimulated émission: stimulated-emission-depletion fluorescence microscopy. *Optics letters,* 1994, vol. 19, 780-782
- **M. J. RUST ; M. BATES ; X. ZHUANG.** Sub-diffraction-limit imaging by stochastic optical reconstruction microscopy (STORM). *Nat Meth,* 2006, vol. 3, 793-796
- **E. BETZIG ; G. H. PATTERSON ; R. SOUGRAT ; O. W. LINDWASSER ; S. OLENYCH ; J.S. BONIFACINO ; M. W. DAVIDSON ; J. LIPPINCOTT-SCHWARTZ ; H. F. HESS.** Imaging intracellular fluorescent proteins at nanomcter resolution. *Science,* 2006, vol. 313, 1642
- **W. DENK ; J. P. STRICKLER ; W. W. WEBB.** Two-photon laser microscopy. *Google Patents,* 1991

- **A. KORZYBSKI ; D. KOHN.** Une carte n'est pas le territoire: prolegomenes aux systèmes non aristotéliciens et à la sémantique générale. 1998
- **W. R. HAMILTON.** Third Supplement to an Essay on the Theory of Systems of Rays. *Trans. Royal Irish. Acad.,* 1-144
- **H. LLYOLD.** On the Phenomena presented by Light in its Passage along the Axes of Biaxial Crystals. *The London and Edinburgh Philosophical Magazine and Journal of Science,* vol. ii, 112-120
- **H. LLYOLD.** Further Experiments on the Phenomena presented by Light in its Passage along the Axes of Biaxal Crystals. *The London and Edinburgh Philosophical Magazine and Journal of Science,* vol. ii, 207-210
- **M. V. BERRY.** Conical diffraction asymptotics: fine structure of Poggendorff rings and axial spike. *Journal Of Optics A-Pure And Applied Optics,* 2004, vol. 6, 289-300
- **M. BERRY ; M. JEFFREY.** Conical diffraction complexified: dichroism and the transition to double refraction. *Journal Of Optics A-Pure And Applied Optics,* 2006, vol. 8, 1043
- **M. BERRY ; M. JEFFREY.** Chiral conical diffraction. *Journal Of Optics A-Pure And Applied Optics,* 2006, vol. 8, 363
- **C. PHELAN ; D. O'DWYER ; Y. RAKOVICH ; J. DONEGAN ; J. LUNNEY.** Conical diffraction and Bessel beam formation with a high optical quality biaxial crystal. *J. Opt. A, Pure Appl. Opt,* 2009, vol. 7, 685-690
- **M. BERRY ; M. JEFFREY.** Conical diffraction: Hamilton's diabolical point at the heart of crystal optics. *Progress in Optics,* 2007, vol. 50, 13
- **A. GEIVANDOV ; I. KASIANOVA ; E. KHARATIYAN ; A. LAZAREV ; P. LAZAREV ; S. PALTO.** *Printable Thin Biréfringent Film Retarders for LCD*
- **B. ACHARYA ; A. PRIMAK ; T. DINGEMANS ; E. SAMULSKI ; S. KUMAR.** The elusive thermotropic biaxial nematic phase in rigid bent-core molecules. *Pramana,* 2003, vol. 61, 231-237
- Electro-optic modulators. **T. MALDONADO.** Handbook of Optics. McGraw Hill, 1995

- **J. KEMP.** Piezo-optical birefringence modulators: new use for a long-known effect. *Journal of the Optical Society of America,* 1969, vol. 59, 950-953
- **M. MINSKY.** Microscopy apparatus. *Google Patents,* 1961
- **D. H. GOLDSTEIN ; E. COLLETT.** Polarized light. CRC, 2003, vol. 83
- **J. B. PAWLEY.** Handbook of biological confocal microscopy. Springer Verlag, 2006
- **M. BASS.** Handbook of optics. McGraw-Hill, 2001
- **Y. ZHANG.** Génération of three-dimensional dark spots with a perfect light shell with a radially polarized Laguerre Gaussian beam. *Applied optics,* 2010, vol. 49, 6217-6223